# EUROPEAN PATENT APPLICATION

(11) **EP 4 817 781 A1**
(43) Date of publication of application: **07.10.2026**
(21) Application number: 24899142.4
(22) Date of filing: 17.05.2024
(51) Int. Cl.: B23K 26/362, B23K 26/382, B23K 26/70, G06T 7/00, H01M 4/04, B41J 3/44

(54) **ELECTRODE SHEET MARKING SYSTEM AND METHOD**

(30) Priority: 06.12.2023 CN 202311658422
(71) Applicant: Contemporary Amperex Technology Co., Limited, Ningde, Fujian 352100 (CN)
(72) Inventor: WU, Chunxu, Ningde, Fujian 352100 (CN); JIANG, Ping, Ningde, Fujian 352100 (CN); CHEN, Yong, Ningde, Fujian 352100 (CN); LI, Hongyuan, Ningde, Fujian 352100 (CN)
(74) Representative: Kraus & Lederer PartGmbB
(86) International application number: PCT/CN2024/094045
(87) International publication number: WO 2025/118490

(57) **Abstract**

The present application discloses an electrode sheet marking system (10) and method. The electrode sheet marking system (10) includes an image acquisition device (11) and a processing device (12). The image acquisition device (11) is configured to perform image acquisition on an electrode sheet roll in an unwinding process to obtain a current image frame. The processing device (12) is communicatively coupled to the image acquisition device (11) and is configured to: detect the current image frame, and under a condition that the positioning mark is detected in the current image frame, determine a marking moment of a target electrode sheet based on an acquisition moment of a reference image frame corresponding to the current image frame, where the target electrode sheet is an electrode sheet that is distinguished by the detected positioning mark, and the marking moment is a moment at which a marking device (14) is triggered to mark the target electrode sheet. The above solution allows marking of an electrode sheet roll provided with a positioning mark.

## Description

### CROSS-REFERENCE TO RELATED APPLICATIONS

The present application claims priority to the Chinese patent application filed with the China National Intellectual Property Administration on December 06, 2023, with application No. 2023116584223 and entitled "ELECTRODE SHEET MARKING SYSTEM AND METHOD", which is incorporated herein by reference in its entirety.

### TECHNICAL FIELD

The present application relates to the field of battery technologies, and in particular, to an electrode sheet marking system and method.

### BACKGROUND

With the improvement of living standards, people increasingly use various batteries (battery packs) in daily life. A cell is a core part of a battery, and the cell further includes a positive electrode sheet and a negative electrode sheet. Therefore, production and detection of electrode sheets exert a significant influence on production of cells.

The existing production process of electrode sheet includes performing positioning marking on electrode sheet rolls and performing detection marking on individual electrode sheets, for example, detecting whether a defect exists in an electrode sheet and performing corresponding marking. In the prior art, a detection marking operation and an arrangement operation of the positioning mark are usually performed in coordination, and the two operations cannot be independent of each other. Detection and marking cannot be performed on an electrode sheet roll on which a positioning mark has been arranged.

### SUMMARY

The present application provides at least an electrode sheet marking system and method, which solves the problem that detection and marking cannot be performed on an electrode sheet roll on which a positioning mark has been arranged.

The present application provides an electrode sheet marking system, including an image acquisition device and a processing device, where the image acquisition device is configured to perform image acquisition on an electrode sheet roll in an unwinding process to obtain a current image frame, the electrode sheet roll includes several electrode sheet segments, and the several electrode sheet segments are distinguished by corresponding positioning marks; and the processing device is communicatively coupled to the image acquisition device and is configured to: detect the current image frame, and under a condition that the positioning mark is detected in the current image frame, determine a marking moment of a target electrode sheet based on an acquisition moment of a reference image frame corresponding to the current image frame, where the target electrode sheet is an electrode sheet that is distinguished by the detected positioning mark, the reference image frame is the current image frame or another image frame obtained by acquiring the electrode sheet roll, and the marking moment is a moment at which a marking device is triggered to mark the target electrode sheet.

In the above solution, the electrode sheet marking system performs image acquisition on the electrode sheet roll, and on the basis of determining that the acquired current image frame contains a positioning mark, uses the acquisition moment of the reference image frame associated with the current image frame as a reference, so as to obtain the marking moment of the target electrode sheet distinguished by the positioning mark in the current image frame. This allows independent determination of the marking moment of an electrode sheet provided with a positioning mark without relying on an arrangement operation of the positioning mark.

In some embodiments, the processing device is configured to determine a marking moment of a target electrode sheet based on an acquisition moment of a reference image frame corresponding to the current image frame, including: obtaining a transport duration required for movement of the electrode sheet roll by a target distance in the unwinding process, where the target distance is a distance between a markable position of the target electrode sheet and the marking device at the acquisition moment of the reference image frame; and determining the marking moment of the target electrode sheet based on the transport duration and the acquisition moment of the reference image frame.

In the above solution, the processing device uses the acquisition moment of the reference image frame as a reference, determines the transport duration for the markable position of the target electrode sheet to move from a position at the acquisition moment of the reference image frame to the marking device, and determines the marking moment of the target electrode sheet. This solution allows the marking moment of the markable position of the target electrode sheet to be determined without relying on an arrangement moment of the positioning mark, thereby improving accuracy of the marking position of the electrode sheet.

In some embodiments, the processing device is configured to determine the marking moment of the target electrode sheet based on the transport duration and the acquisition moment of the reference image frame, including: using a sum of the acquisition moment of the reference image frame and the transport duration as the marking moment of the target electrode sheet, or determining a current marking waiting time of the target electrode sheet as the transport duration at the acquisition moment of the reference image frame.

In the above solution, the processing device may directly determine an accurate time point corresponding to the marking moment, by using the acquisition moment of the reference image frame and the transport duration, or may determine a current moment after waiting for the transport duration as the marking moment at the acquisition moment of the reference image frame. The processing device may flexibly choose to directly determine the time point of the marking moment or determine the current moment after waiting as the marking moment, so as to flexibly adapt to different application scenarios.

In some embodiments, the image acquisition device is further configured to send a notification signal to the processing device in response to acquisition of an image frame; and the processing device is further configured to receive a notification signal that the image acquisition device acquires an image frame, and record the acquisition moment of the image frame in response to the notification signal to obtain the acquisition moment of the reference image frame.

In the above solution, under a condition that the processing device records the acquisition moment of the image frame, the recorded acquisition moment of the reference image frame is directly used in combination with the transport duration to obtain an accurate time point of the marking moment, so as to determine the marking moment of the target electrode sheet without relying on an arrangement moment of the positioning mark.

In some embodiments, the image acquisition device includes a camera and an acquisition card, where the camera is configured to perform image acquisition on an electrode sheet roll in an unwinding process to obtain an image frame; and the acquisition card is communicatively coupled to the camera and the processing device, and is configured to: send a notification signal to the processing device in response to acquisition of an image frame, and send the image frame to the processing device, so that the processing device detects the current image frame.

In the above solution, the acquisition card is configured to be communicatively coupled to the camera and the processing device, and sends a notification signal to the processing device when an image frame is acquired. The processing device records the acquisition moment of the image frame in response to the notification signal, so as to obtain the marking moment, and determine the marking moment of the target electrode sheet without relying on an arrangement moment of the positioning mark.

In some embodiments, the electrode sheet marking system further includes an encoder, where the encoder is communicatively coupled to the processing device and the image acquisition device, and is configured to output a pulse signal to each of the processing device and the image acquisition device; the image acquisition device is configured to perform image acquisition in response to the pulse signal; and the processing device is configured to record the acquisition moment of the image frame in response to the notification signal, including: recording a pulse count corresponding to pulses output by the encoder at the acquisition moment of the image frame in response to the notification signal.

In the above solution, an encoder capable of sending pulses is arranged to trigger image acquisition and provide a reference for recording a moment, the pulse count of the encoder is used to characterize the acquisition moment of the image frame, and the acquisition moment of the image frame is accurately recorded to determine the marking moment of the target electrode sheet, so as to improve the accuracy of the marking moment.

In some embodiments, the reference image frame is another image frame after the current image frame, and the processing device is further configured to, under a condition that the positioning mark is detected in the current image frame, monitor whether acquisition of the reference image frame is completed to obtain the acquisition moment of the reference image frame, where the acquisition moment of the reference image frame is used as a starting moment of a current marking waiting time of the target electrode sheet to obtain the marking moment of the target electrode sheet.

In the above solution, under a condition that the acquisition moment of the image frame cannot be recorded, the processing device also obtains the acquisition moment of the reference image frame by monitoring the acquisition of the reference image frame that has not been acquired yet after the current image frame containing the positioning mark, and determine the moment after waiting for the transport duration as the marking moment, so as to determine the marking moment of the target electrode sheet without relying on an arrangement moment of the positioning mark.

In some embodiments, the processing device is configured to obtain a transport duration required for movement of the electrode sheet roll by a target distance in the unwinding process, including: determining the target distance by using a preset distance between the image acquisition device and the marking device, a position of the positioning mark in the current image frame, a distance between the positioning mark and the markable position, and a distance between the current image frame and the reference image frame; and determining the transport duration by using the target distance.

In the above solution, according to the position of the positioning mark in the current image frame, the processing device may associate the position of the positioning mark at the acquisition moment of the current image frame with the position of the image acquisition device, and in combination with the preset distance between the image acquisition device and the marking device, the distance between the positioning mark and the markable position, and the distance of electrode sheet roll movement during the interval between capturing the current image frame and the reference image frame, obtain the target distance between the positioning mark and the marking device at the acquisition moment of the reference image frame, and also obtain a time interval between a reference value, that is, the acquisition moment of the reference image frame, and the marking moment, so as to determine the marking moment without relying on an arrangement moment of the positioning mark.

In some embodiments, the electrode sheet marking system further includes an encoder, where the encoder is communicatively coupled to the image acquisition device and is configured to output a pulse signal to the image acquisition device; the image acquisition device is configured to perform image acquisition in response to the pulse signal; the processing device is configured to determine the transport duration by using the target distance, including: dividing the target distance by a single-pulse precision of the encoder to obtain a first pulse count used to characterize the transport duration; and the processing device is configured to use a sum of the acquisition moment of the reference image frame and the transport duration as the marking moment of the target electrode sheet, including: recording a pulse count of the encoder each time the image acquisition device acquires an image frame to obtain a second pulse count, where the second pulse count is a pulse count recorded at the acquisition moment of the reference image frame; and determining to trigger marking of the target electrode sheet under a condition that a recorded pulse count reaches a sum of the first pulse count and the second pulse count.

In the above solution, an encoder capable of sending pulses is arranged to trigger image acquisition and associate image acquisition with pulses, the pulse count of the encoder may be used to directly determine an accurate time point corresponding to the marking moment, the second pulse count is used to represent the acquisition moment of the reference image frame, and the first pulse count is used to represent the transport duration. Therefore, the moment at which the pulse count is the sum of the first pulse count and the second pulse count is determined as the marking moment, to trigger marking, which improves the accuracy of the marking moment.

In some embodiments, the electrode sheet marking system further includes an encoder, where the encoder is communicatively coupled to the image acquisition device and the processing device and is configured to output a pulse signal to each of the processing device and the image acquisition device; the image acquisition device is configured to perform image acquisition in response to the pulse signal; the processing device is configured to determine the transport duration by using the target distance, including: dividing the target distance by a single-pulse precision of the encoder to obtain a first pulse count used to characterize the transport duration; and the processing device is configured to determine a current marking waiting time of the target electrode sheet as the transport duration at the acquisition moment of the reference image frame, including: at the acquisition moment of the reference image frame, waiting for the encoder to output a pulse signal of the first pulse count before triggering marking of the target electrode sheet.

In the above solution, an encoder capable of sending pulses is arranged to trigger image acquisition and associate image acquisition with pulses, and marking is performed after waiting for a pulse signal of the first pulse count on the basis of the pulse count corresponding to the acquisition moment of the reference image frame, thereby improving the accuracy of the marking moment.

In some embodiments, the processing device is further configured to: search a plurality of image frames acquired by the image acquisition device for the electrode sheet roll for several image frames each including at least part of the target electrode sheet; perform defect detection on the target electrode sheet by using the several image frames each including at least part of the target electrode sheet to obtain a defect detection result of the target electrode sheet; and determine, based on the defect detection result of the target electrode sheet, whether to trigger the marking device to mark the target electrode sheet.

In the above solution, the processing device performs defect detection to obtain a defect detection result of the target electrode sheet, and determines, according to whether the target electrode sheet contains defects, whether to trigger the marking device to mark the target electrode sheet. This solution enables distinction between normal electrode sheets and defective electrode sheets for reference in subsequent processing, thereby reducing the impact caused by defective electrode sheets.

In some embodiments, the processing device is configured to determine, based on the defect detection result of the target electrode sheet, whether to trigger the marking device to mark the target electrode sheet, including: in response to the defect detection result indicating that no defect exists in the target electrode sheet, canceling sending of a marking signal of the target electrode sheet to the marking device, where the marking signal is used to instruct the marking device to mark that a defect exists in the target electrode sheet; and in response to the defect detection result indicating that a defect exists in the target electrode sheet, retaining sending of a marking signal of the target electrode sheet to the marking device.

In the above solution, the processing device adopts a default marking method, retains the marking signal for defective electrode sheets, and cancels the marking signal for non-defective electrode sheets, so as to mark defective electrode sheets and distinguish normal electrode sheets from defective electrode sheets.

In some embodiments, the image acquisition device is provided in plurality, and the plurality of image acquisition devices are respectively arranged at different positions and are configured to perform image acquisition at different positions on a transport path of the electrode sheet roll; and at least two of the plurality of image acquisition devices serve as target image acquisition devices, and each of the target image acquisition devices is configured to perform image acquisition on an electrode sheet roll in the unwinding process to obtain a current image frame of the target image acquisition device; and the processing device is further configured to: in response to determination of a marking moment of a target electrode sheet corresponding to one target image acquisition device, update the marking moment of the target electrode sheet by using a latest determined marking moment of the target electrode sheet corresponding to the target image acquisition device.

In the above solution, a plurality of image acquisition devices may be arranged at different positions to determine the marking moment of the target electrode sheet, and under a condition that some image acquisition devices are abnormal, the marking moment of the target electrode sheet is still determinable, thereby improving the stability of determining the marking moment.

In some embodiments, the target image acquisition devices include a first target image acquisition device arranged before slitting the electrode sheet roll and a second target image acquisition device arranged after slitting the electrode sheet roll.

In the above solution, the first target image acquisition device determines the marking moment of the electrode sheet before slitting, and the second target image acquisition device determines the marking moment of the electrode sheet after slitting, thereby ensuring the stability of determining the marking moment through image acquisition devices respectively arranged before and after slitting.

In some embodiments, the electrode sheet roll is unwound by an unwinding device of an integrated die-cutting and slitting machine, and the positioning mark is arranged on the electrode sheet roll before unwinding, and in the unwinding process of the electrode sheet roll, a marking arranging device for arranging the positioning mark in the integrated die-cutting and slitting machine is inactive.

In the above solution, the electrode sheet marking system may be applied to an electrode sheet roll unwound by an integrated die-cutting and slitting machine, and under a condition that the marking arranging device is inactive, it also enables determination of the marking moment of an electrode sheet on the electrode sheet roll that has been provided with positioning marks and is unwound by the integrated die-cutting and slitting machine without relying on an arrangement moment of positioning marks.

In some embodiments, the positioning mark is a dividing mark for dividing two adjacent electrode sheet segments.

In the above solution, the dividing mark divides adjacent electrode sheets and may be used as a positioning electrode sheet, which enables distinction of the target electrode sheet on the electrode sheet roll.

In some embodiments, the another image frame is obtained by acquiring the electrode sheet roll after the current image frame.

In the above solution, the another image frame acquired after the current image frame may be flexibly selected as the reference image frame, so that an acquisition moment of an image frame acquired after the current image frame may be used as a reference for the marking moment.

In some embodiments, the processing device includes: an image detection device configured to: detect the current image frame, and under a condition that the positioning mark is detected in the current image frame, determine the marking moment of the target electrode sheet based on the acquisition moment of the reference image frame corresponding to the current image frame; or the processing device includes: an image detection device and a marking control device that are communicatively connected, where the image detection device is configured to: detect the current image frame, and upon detecting that a positioning mark exists in the current image frame, send a trigger signal to the marking control device, and the marking control device is configured to determine the marking moment of the target electrode sheet based on the acquisition moment of the reference image frame in response to the trigger signal; or the processing device includes: an image detection device and a marking control device that are communicatively connected, where the image detection device is configured to: detect the current image frame, and upon detecting that a positioning mark exists in the current image frame, obtain an intermediate parameter for determining the marking moment of the target electrode sheet and send the intermediate parameter to the marking control device, and the marking control device is configured to determine the marking moment of the target electrode sheet by using the intermediate parameter.

In the above solution, the processing device may be flexibly configured as an image detection device, or configured as an image detection device and a marking control device. The image detection device may independently determine the marking moment of the target electrode sheet, may also trigger the marking control device to independently determine the marking moment of the target electrode sheet, and may also collaboratively determine the marking moment of the target electrode sheet with the marking control device, so as to meet the requirements of different application scenarios.

In some embodiments, the intermediate parameter includes a target distance or a transport duration required for movement of the electrode sheet roll by a target distance in the unwinding process, where the target distance is a distance between a markable position of the target electrode sheet and the marking device at the acquisition moment of the reference image frame.

In the above solution, the image detection device obtains the target distance or the transport duration as an intermediate parameter, so that the marking control device may obtain the marking moment based on the intermediate parameter, realizing collaborative determination of the marking moment by the image detection device and the marking control device.

In some embodiments, the image acquisition device is provided in plurality, and the plurality of image acquisition devices are respectively arranged at different positions and are configured to perform image acquisition at different positions on a transport path of the electrode sheet roll; and at least two of the plurality of image acquisition devices serve as target image acquisition devices, and each of the target image acquisition devices is configured to perform image acquisition on an electrode sheet roll in the unwinding process to obtain a current image frame of the target image acquisition device; and the image detection device is provided in plurality, and each of the image detection devices is configured to be communicatively coupled to at least one target image acquisition device and at least configured to detect a current image frame of the connected target image acquisition device.

In the above solution, a plurality of image detection devices may be arranged to detect current image frames acquired by the target image acquisition devices connected thereto, so as to determine the marking moment by using image frames acquired by the various target image acquisition devices.

In some embodiments, the system further includes a marking device, where the marking device is communicatively coupled to the processing device, the processing device is further configured to send a marking instruction to the marking device at the marking moment, and the marking device is configured to mark the target electrode sheet in response to the marking instruction.

In the above solution, the electrode sheet marking system may further be provided with a marking device. After determining the marking moment, the processing device may send a marking instruction to the marking device, and the marking device marks the target electrode sheet in response to the marking instruction. This realizes independent marking of an electrode sheet provided with a positioning mark without relying on an arrangement operation of the positioning mark.
including: performing image acquisition on an electrode sheet roll in an unwinding process to obtain a current image frame, where the electrode sheet roll includes several electrode sheet segments, and the several electrode sheet segments are distinguished by corresponding positioning marks; and detecting the current image frame, and under a condition that the positioning mark is detected in the current image frame, determining a marking moment of a target electrode sheet based on an acquisition moment of a reference image frame corresponding to the current image frame, where the target electrode sheet is an electrode sheet that is distinguished by the detected positioning mark, the reference image frame is the current image frame or another image frame obtained by acquiring the electrode sheet roll, and the marking moment is a moment at which a marking device is triggered to mark the target electrode sheet.

In the above solution, image acquisition is performed on the electrode sheet roll, and on the basis of determining that the acquired current image frame contains a positioning mark, the acquisition moment of the reference image frame associated with the current image frame is used as a reference, so as to obtain the marking moment of the target electrode sheet distinguished by the positioning mark in the current image frame. This allows independent determination of the marking moment of an electrode sheet provided with a positioning mark without relying on an arrangement operation of the positioning mark.

In some embodiments, the determining a marking moment of a target electrode sheet based on an acquisition moment of a reference image frame corresponding to the current image frame includes: obtaining a transport duration required for movement of the electrode sheet roll by a target distance in the unwinding process, where the target distance is a distance between a markable position of the target electrode sheet and the marking device at the acquisition moment of the reference image frame; and determining the marking moment of the target electrode sheet based on the transport duration and the acquisition moment of the reference image frame.

In the above solution, the acquisition moment of the reference image frame is used as a reference, the transport duration for the markable position of the target electrode sheet to move from the position at the acquisition moment of the reference image frame to the marking device is determined, and the marking moment of the target electrode sheet is determined. This solution allows the marking moment of the markable position of the target electrode sheet to be determined without relying on an arrangement moment of the positioning mark, thereby improving accuracy of the marking position of the electrode sheet.

In some embodiments, the determining the marking moment of the target electrode sheet based on the transport duration and the acquisition moment of the reference image frame includes: using a sum of the acquisition moment of the reference image frame and the transport duration as the marking moment of the target electrode sheet, or determining a current marking waiting time of the target electrode sheet as the transport duration at the acquisition moment of the reference image frame.

In the above solution, the acquisition moment of the reference image frame and the transport duration may be used to directly determine an accurate time point corresponding to the marking moment, or the current moment after waiting for the transport duration may be determined at the acquisition moment of the reference image frame as the marking moment. This solution enables to flexibly choose to directly determine the time point of the marking moment or determine the current moment after waiting as the marking moment, so as to flexibly adapt to different application scenarios.

In some embodiments, the step of using a sum of the acquisition moment of the reference image frame and the transport duration as the marking moment of the target electrode sheet is performed under a condition that a notification signal for acquisition of an image frame is received and the acquisition moment of the image frame is recorded in response to the notification signal, and the reference image frame is the current image frame.

In the above solution, under a condition that the acquisition moment of the image frame is recorded, the recorded acquisition moment of the reference image frame is directly used in combination with the transport duration to obtain an accurate time point of the marking moment, so as to determine the marking moment of the target electrode sheet without relying on an arrangement moment of the positioning mark.

In some embodiments, the step of determining a current marking waiting time of the target electrode sheet as the transport duration at the acquisition moment of the reference image frame is performed under a condition that a notification signal for acquisition of an image frame is not received, the reference image frame is another image frame after the current image frame, and before the determining a current marking waiting time of the target electrode sheet as the transport duration at the acquisition moment of the reference image frame, the method further includes: monitoring whether acquisition of the reference image frame is completed to obtain the acquisition moment of the reference image frame.

In the above solution, under a condition that the acquisition moment of the image frame cannot be recorded, the acquisition moment of the reference image frame is obtained by monitoring the acquisition of the reference image frame that has not been acquired yet after the current image frame containing the positioning mark, and the moment after waiting for the transport duration is determined as the marking moment, so as to determine the marking moment of the target electrode sheet without relying on an arrangement moment of the positioning mark.

In some embodiments, the obtaining a transport duration required for movement of the electrode sheet roll by a target distance in the unwinding process includes: determining the target distance by using a preset distance between the image acquisition device and the marking device, a position of the positioning mark in the current image frame, a distance between the positioning mark and the markable position, and a distance between the current image frame and the reference image frame; and determining the transport duration by using the target distance.

In the above solution, according to the position of the positioning mark in the current image frame, the position of the positioning mark at the acquisition moment of the current image frame is associated with the position of the image acquisition device, and in combination with the preset distance between the image acquisition device and the marking device, the distance between the positioning mark and the markable position, and the distance of electrode sheet roll movement during the interval between capturing the current image frame and the reference image frame, the target distance between the positioning mark and the marking device at the acquisition moment of the reference image frame is obtained, and a time interval between a reference value, that is, the acquisition moment of the reference image frame, and the marking moment may also be obtained, so as to determine the marking moment without relying on an arrangement moment of the positioning mark.

In some embodiments, the step of performing image acquisition on an electrode sheet roll in an unwinding process is performed by performing image acquisition in response to a pulse signal sent by an encoder, and the determining the transport duration by using the target distance includes: dividing the target distance by a single-pulse precision of the encoder to obtain a first pulse count used to characterize the transport duration; and the using a sum of the acquisition moment of the reference image frame and the transport duration as the marking moment of the target electrode sheet includes: recording a pulse count of the encoder each time an image frame is acquired to obtain a second pulse count, where the second pulse count is a pulse count recorded at the acquisition moment of the reference image frame; and determining to trigger marking of the target electrode sheet under a condition that a recorded pulse count reaches a sum of the first pulse count and the second pulse count.

In the above solution, an encoder capable of sending pulses is arranged to associate image acquisition with pulses, the pulse count of the encoder may be used to directly determine an accurate time point corresponding to the marking moment, the second pulse count is used to represent the acquisition moment of the reference image frame, and the first pulse count is used to represent the transport duration. Therefore, the moment at which the pulse count is the sum of the first pulse count and the second pulse count is determined as the marking moment, to trigger marking, which improves the accuracy of the marking moment.

In some embodiments, the step of performing image acquisition on an electrode sheet roll in an unwinding process is performed by performing image acquisition in response to a pulse signal sent by an encoder, and the determining the transport duration by using the target distance includes: dividing the target distance by a single-pulse precision of the encoder to obtain a first pulse count used to characterize the transport duration; and the determining a current marking waiting time of the target electrode sheet as the transport duration at the acquisition moment of the reference image frame includes: at the acquisition moment of the reference image frame, waiting for the encoder to output a pulse signal of the first pulse count before triggering marking of the target electrode sheet.

In the above solution, an encoder capable of sending pulses is arranged to associate image acquisition with pulses, so that marking is performed after waiting for a pulse signal of the first pulse count on the basis of the pulse count corresponding to the acquisition moment of the reference image frame, thereby improving the accuracy of the marking moment.

In some embodiments, the step of detecting the current image frame and, under a condition that the positioning mark is detected in the current image frame, determining a marking moment of a target electrode sheet based on an acquisition moment of a reference image frame corresponding to the current image frame is performed by an image detection device, or is performed cooperatively by the image detection device and a marking control device.

In the above solution, an image detection device may be flexibly arranged, or an image detection device and a marking control device may be arranged to determine the marking moment of the target electrode sheet based on the acquisition moment of the reference image frame corresponding to the current image frame, so as to meet the requirements of different application scenarios.

It should be understood that the foregoing general description and the following detailed description are merely exemplary and illustrative, and are not intended to limit the present application.

### BRIEF DESCRIPTION OF DRAWINGS

The accompanying drawings herein are incorporated into the specification and constitute a part of this specification. These drawings show embodiments conforming to the present application and, together with the specification, are used to explain the technical solutions of the present application.
FIG. 1 is a first schematic diagram of an electrode sheet marking system according to some embodiments of the present application;
FIG. 2 is a second schematic diagram of an electrode sheet marking system according to some embodiments of the present application;
FIG. 3 is a third schematic diagram of an electrode sheet marking system according to some embodiments of the present application;
FIG. 4 is a schematic diagram of a target distance according to some embodiments of the present application;
FIG. 5 is a schematic diagram of electrical connections of an electrode sheet marking system according to some embodiments of the present application;
FIG. 6 is a schematic diagram of signal connections of an electrode sheet marking system according to some embodiments of the present application;
FIG. 7 is another schematic diagram of signal connections of an electrode sheet marking system according to some embodiments of the present application; and
FIG. 8 is a schematic flowchart of an electrode sheet marking method according to some embodiments of the present application.

### DESCRIPTION OF EMBODIMENTS

The embodiments of the technical solution of the present application will be described in detail below in conjunction with the accompanying drawings. The following embodiments are only used to more clearly illustrate the technical solutions of the present application, and are therefore only used as examples and cannot be used to limit the protection scope of the present application.

Unless otherwise defined, all technical and scientific terms used herein have the same meaning as commonly understood by those skilled in the art belonging to the technical field of the present application; the terms used herein are only for the purpose of describing specific embodiments and are not intended to limit the present application; the terms "include" and "have", as well as any variations thereof in the specification and claims of the present application and the above drawings are intended to cover non-exclusive inclusion.

In the description of the embodiments of the present application, the technical terms "first", "second", and the like are only used to distinguish different objects, and cannot be understood as indicating or implying relative importance or implicitly indicating the number, specific order or primary-secondary relationship of the indicated technical features. In the description of the embodiments of the present application, "a plurality of" means two or more, unless otherwise clearly and specifically limited.

Reference to "embodiment" herein means that a specific feature, structure or characteristic described in conjunction with the embodiment may be included in at least one embodiment of the present application. The appearance of the phrase in various positions in the specification does not necessarily refer to the same embodiment, nor is it an independent or alternative embodiment that is mutually exclusive with other embodiments. It is explicitly and implicitly understood by those skilled in the art that the embodiments described herein is allows to be combined with other embodiments.

In the description of the embodiments of the present application, the term "and/or" is only a description of an association relationship of associated objects, indicating that three relationships may exist. For example, A and/or B may mean: A exists alone, A and B exist simultaneously, and B exists alone. In addition, the character "/" in this document generally indicates that the associated objects before and after are in an "or" relationship.

Currently, the production process of battery electrode sheets includes segmenting and detection marking of electrode sheet rolls. The detection of electrode sheets may be to detect whether defects exist on the electrode sheets. The detection may be performed on the electrode sheets, and marking may be used to distinguish electrode sheets with different detection results. The segmentation of electrode sheet rolls is achieved by arranging positioning marks. Usually, detection marking and the arrangement operation of positioning marks are performed in coordination. Detection marking may depend on the arrangement operation of positioning marks, and the two cannot be independent of each other. For example, for an electrode sheet roll on which positioning marks have been arranged, detection and marking cannot be performed independently. Therefore, the embodiments of the present application propose the following method for marking an electrode sheet roll on which positioning marks have been arranged, which allows independent marking of an electrode sheet roll on which positioning marks have been arranged without relying on the arrangement of the positioning marks.

The electrode sheet marking method according to the present application is applicable to marking electrode sheets contained in an electrode sheet roll. Specifically, the method is applied to mark electrode sheets contained in an electrode sheet roll in an unwinding process. Further, the method may be applied to mark an electrode sheet roll unwound on an integrated die-cutting and slitting machine. The electrode sheet roll after marking may be used for manufacturing a battery electrode sheet.

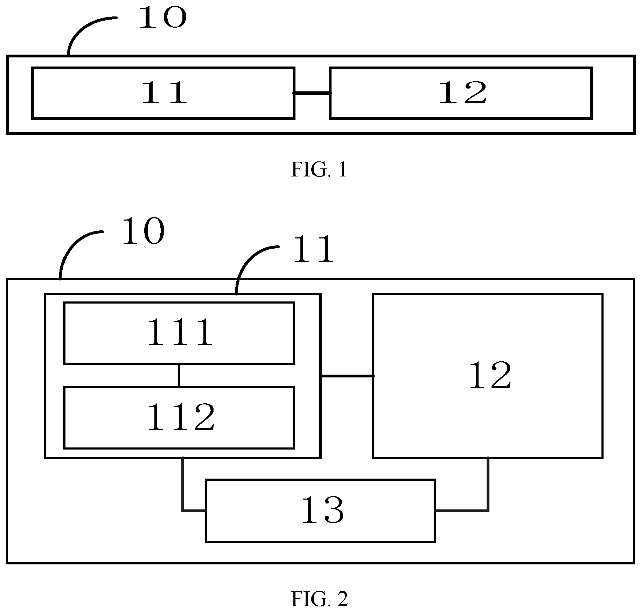

Referring to FIG. 1, FIG. 1 is a first schematic diagram of an electrode sheet marking system according to some embodiments of the present application.

As shown in the figure, the electrode sheet marking system 10 may include an image acquisition device 11 and a processing device 12.

The image acquisition device 11 is configured to perform image acquisition on an electrode sheet roll in an unwinding process to obtain a current image frame.

In a specific application scenario, the image acquisition device 11 may acquire an image of a partial area of the electrode sheet roll at predetermined time intervals to acquire different positions of the electrode sheet roll moving in the unwinding process. The image acquired at the current moment may be referred to as the current image frame.

The electrode sheet roll includes several electrode sheet segments, and the several electrode sheet segments may be distinguished by corresponding positioning marks. Specifically, each electrode sheet segment may be associated with a positioning mark, and the associated electrode sheets may be distinguished according to a plurality of positioning marks on the electrode sheet roll.

The processing device 12 is communicatively coupled to the image acquisition device 11. The processing device 12 is configured to: detect the current image frame, and under a condition that the positioning mark is detected in the current image frame, determine a marking moment of a target electrode sheet based on an acquisition moment of a reference image frame corresponding to the current image frame.

The target electrode sheet is an electrode sheet that is distinguished by the positioning mark detected in the current image frame.

Specifically, detection regarding the positioning mark may be performed on the current image frame to detect whether a positioning mark exists in the current image frame. Under a condition that the positioning mark is detected in the current image frame, the corresponding electrode sheet on the electrode sheet roll is identified and may be referred to as the target electrode sheet.

For example, a length of each electrode sheet segment may be fixed to L0, and the positioning mark may also be arranged at the length center of each electrode sheet segment, that is, at the length L0/2. The associated electrode sheets are thus distinguished by the positioning mark. In a specific application scenario, if the positioning mark is a mark at the length center, the range spanning a length of L0/2 to the left and right of the positioning mark may serve as the target electrode sheet.

The marking moment of the target electrode sheet may be determined based on the acquisition moment of the reference image frame corresponding to the current image frame. The reference image frame may be the current image frame, or may be another image frame obtained by acquiring the electrode sheet roll. The acquisition moment of the reference image frame is a moment at which the image acquisition device 11 acquires the reference image frame. The marking moment is a moment at which a marking device is triggered to mark the target electrode sheet.

In some embodiments, the another image frame may be an image frame acquired after the current image frame is acquired. In some embodiments, the another image frame may also be an image frame acquired before the current image frame is acquired. The specific arrangement may be made according to actual application needs.

The acquisition moment of the reference image frame corresponding to the current image frame is used as a reference for marking the target electrode sheet associated with the positioning mark in the current image frame, and the marking moment of the target electrode sheet is determined according to the reference.

In the above solution, the electrode sheet marking system performs image acquisition on the electrode sheet roll, and on the basis of determining that the acquired current image frame contains a positioning mark, uses the acquisition moment of the reference image frame associated with the current image frame as a reference, so as to obtain the marking moment of the target electrode sheet distinguished by the positioning mark in the current image frame. This allows independent determination of the marking moment of an electrode sheet provided with a positioning mark without relying on an arrangement operation of the positioning mark.

The above method may be applied to an electrode sheet roll provided with a positioning mark but not subjected to detection and marking. It does not rely on an arrangement operation of the positioning marks but relies on visual detection to realize re-detection and re-marking of the electrode sheet roll. The electrode sheet roll that has completed re-detection and re-marking proceeds to subsequent processes. Compared with directly discarding the electrode sheet roll provided with a positioning mark but not subjected to detection and marking, this solution reduces waste and costs.

In some embodiments, the positioning mark may be a dividing mark for dividing two adjacent electrode sheet segments, that is, one side of the positioning mark is one electrode sheet, and the other side of the positioning mark is the other electrode sheet.

Certainly, the positioning mark is not limited to the dividing mark in the previous example, and may be set according to actual application needs.

For example, if the positioning mark is a dividing mark, the electrode sheet before the dividing mark may be used as the target electrode sheet, or the electrode sheet after the dividing mark may be used as the target electrode sheet.

In some embodiments, the marking moment may be used to trigger the marking device to perform marking at the marking moment. Specifically, the processing device 12 may send a marking signal to the marking device to trigger the marking device to operate.

Further, the processing device is configured to determine a marking moment of a target electrode sheet based on an acquisition moment of a reference image frame corresponding to the current image frame, including: obtaining a transport duration required for movement of the electrode sheet roll by a target distance in the unwinding process, where the target distance is a distance between a markable position of the target electrode sheet and the marking device at the acquisition moment of the reference image frame; and determining the marking moment of the target electrode sheet based on the transport duration and the acquisition moment of the reference image frame.

The target distance may be a distance between a markable position of the target electrode sheet and the marking device at the acquisition moment of the reference image frame.

In a specific application scenario, the marking device may be arranged on the movement path of the electrode sheet roll in the unwinding process. The marking device allows marking on the unwinding electrode sheet roll by means of inkjet or the like. As the electrode sheet roll is unwound, the markable position of the target electrode sheet moves to an operating position of the marking device (the position where the mark is made), and the marking device performs marking, which allows marking at the markable position of the target electrode sheet. The target distance may be a distance between the markable position of the target electrode sheet and the operating position of the target device at the acquisition moment of the reference image frame. For ease of understanding and simplified description, it may be referred to as the distance between the markable position of the target electrode sheet and the marking device.

The markable position of the target electrode sheet is located within the range of the target electrode sheet. Further, the markable position may be a certain area within the target electrode sheet, and the markable position may be determined by defining it in a length direction of the electrode sheet. For example, the markable position may be arranged such that a distance from a starting position in the length direction of the target electrode sheet is a preset length range. Alternatively, the markable position may be a fixed position within the target electrode sheet. For example, the markable position may be arranged such that a distance from a starting position in the length direction of the target electrode sheet is a preset distance.

In a specific application scenario, the positioning mark may also be used as a reference for the markable position, and a position at a preset distance from the positioning mark of the target electrode sheet in the length direction may be used as the markable position. The positioning mark may be a dividing mark or may not be limited to a dividing mark.

At the acquisition moment of the reference image frame, the distance between the target electrode sheet and the marking device is the target distance. As the electrode sheet roll moves, the target electrode sheet moves toward the marking device, and after experiencing the transport duration from the acquisition moment, the markable position of the target electrode sheet moves to the marking device, so that marking is performed at the markable position. Therefore, after determining the transport duration and the acquisition moment of the reference image frame, the marking moment of the target electrode sheet is obtained.

It should be noted that the marking moment is affected by the markable position. If the markable position is a certain range, the transport duration may correspondingly be a time range corresponding to the starting position and ending position of the markable position, and the marking moment may be any moment within a certain time range. If the markable position is a fixed position, the transport duration may correspondingly be a fixed duration, and the marking moment may also be a fixed moment.

By using the acquisition moment of the reference image frame as a reference, the transport duration for the markable position of the target electrode sheet to move from the position at the acquisition moment of the reference image frame to the marking device is determined, and the marking moment of the target electrode sheet is determined. This solution allows the marking moment of the markable position of the target electrode sheet to be determined without relying on an arrangement moment of the positioning mark, thereby improving accuracy of the marking position of the electrode sheet. The markable position may be arranged according to actual needs, and may be a certain range or a determined position, so as to adapt to various needs.

In some embodiments, the processing device 12 may add the transport duration to the acquisition moment of the reference image frame, and use the obtained moment as the marking moment of the target electrode sheet. Alternatively, the processing device 12 may also use the determined transport duration as the current marking waiting time of the target electrode sheet at the acquisition moment of the reference image frame, that is, starting from the acquisition moment of the reference image frame, trigger the marking device to perform marking after waiting for the current marking waiting time.

In some embodiments, the image acquisition device 11 is further configured to send a notification signal to the processing device 12 in response to acquisition of an image frame. The processing device 12 is further configured to receive a notification signal that the image acquisition device acquires an image frame, and record the acquisition moment of the image frame in response to the notification signal to obtain the acquisition moment of the reference image frame.

In the above manner, the image acquisition device 11 sends a notification signal each time it acquires an image frame. The processing device 12 may record the acquisition moment of each image frame in response to the received notification signal, so as to obtain the acquisition moment of the reference image frame.

Therefore, the acquisition moment of any image frame may be recorded. The reference image frame may be any image frame. Further, the current image frame may be selected as the reference image frame. After the acquisition moment of the reference image frame is recorded, the reference image frame may be used as a reference to determine the marking moment.

In some embodiments, the processing device may use the current image frame as the reference image frame. After recording the acquisition moment of the reference image frame, a sum of the acquisition moment of the reference image frame and the transport duration may be used as the marking moment of the target electrode sheet. Certainly, other methods may also be used, which will not be enumerated herein.

It should be noted that the method of using the sum of the acquisition moment of the reference image frame and the transport duration as the marking moment of the target electrode sheet is performed under a condition that the acquisition moment of the image frame is recorded.

In some embodiments, under a condition that the acquisition moment of the image frame is recorded, a method of using the determined transport duration as the current marking waiting time of the target electrode sheet at the acquisition moment of the reference image frame may also be used to trigger the marking device to perform marking.

Referring to FIG. 2, FIG. 2 is a second schematic diagram of an electrode sheet marking system according to some embodiments of the present application.

In combination with the relevant descriptions of the foregoing embodiments, the image acquisition device 11 may acquire external images for performing image acquisition on the electrode sheet roll in the unwinding process. Specifically, it may include a camera 111 and an acquisition card 112. The camera 111 is configured to perform image acquisition on an electrode sheet roll in an unwinding process to obtain an image frame. The acquired image frame includes the current image frame and the reference image frame. For example, the camera 111 may be a line scan camera or the like.

The acquisition card 112 is communicatively coupled to the camera 111 and the processing device 12. The acquisition card 112 is configured to send a notification signal to the processing device 12 in response to acquisition of an image frame, and send the image frame to the processing device 12, so that the processing device 12 detects the current image frame.

The acquisition card 112 is configured to be communicatively coupled to the camera 111 and the processing device 12, which sends a notification signal to the processing device 12 when an image frame is acquired, so that the processing device 12 may record the acquisition moment of each image frame in response to the notification signal to obtain the marking moment. This realizes determining the marking moment of the target electrode sheet without relying on an arrangement moment of the positioning mark.

Still referring to FIG. 2, FIG. 2 also shows that in some embodiments, the electrode sheet marking system 10 may further include an encoder 13. The encoder 13 is communicatively coupled to the processing device 12 and the image acquisition device 11, and is configured to output a pulse signal to each of the processing device 12 and the image acquisition device 11.

The image acquisition device 11 may perform image acquisition in response to the pulse signal. The processing device 12 may record the acquisition moment of the image frame in response to the notification signal, including: recording a pulse count corresponding to pulses output by the encoder 13 at the acquisition moment of the image frame in response to the notification signal.

Therefore, an encoder 13 capable of sending pulses is arranged to trigger image acquisition and provide a reference for recording a moment, the pulse count of the encoder 13 is used to characterize the acquisition moment of the image frame, and the acquisition moment of the image frame is accurately recorded to determine the marking moment of the target electrode sheet, so as to improve the accuracy of the marking moment.

It should be understood that the pulse signal output by the encoder 13 may be associated with the unwinding of the electrode sheet roll.

It should be understood that the acquisition moment of the image frame may also be recorded in other ways, which is specifically set according to actual application needs, and will not be enumerated herein.

In some embodiments, the processing device 12 may further be configured to, under a condition that the positioning mark is detected in the current image frame, monitor whether acquisition of the reference image frame is completed to obtain the acquisition moment of the reference image frame. The reference image frame may be another image frame after the current image frame. The reference image frame obtained in the above manner may be used to obtain the marking moment of the target electrode sheet.

In a specific application scenario, the acquisition moment of the reference image frame is used as the starting moment of the current marking waiting time of the target electrode sheet to obtain the marking moment of the target electrode sheet.

Further, the method of using the transport duration as the current marking waiting time of the target electrode sheet at the acquisition moment of the reference image frame may be performed under a condition that the acquisition moment of the image frame cannot be recorded through the notification signal of the image acquisition device 11.

It should be understood that since the acquisition moment of the current image frame cannot be recorded through the notification signal of the image acquisition device 11, the acquisition moment of the current image frame cannot be determined, so it cannot be used as the reference image frame. The image that has not been acquired yet after the current image frame may be used as the reference image frame. After determining that a positioning mark exists in the current image frame, the acquisition moment of the reference image frame is obtained as a reference for the positioning moment. The processing device 12 may further perform: monitoring whether acquisition of the reference image frame is completed to obtain the acquisition moment of the reference image frame.

In a specific application scenario, the processing device 12 is communicatively coupled to the image acquisition device 11, and the processing device 12 may obtain the image frame acquired by the image acquisition device 11. Under a condition that the positioning mark is detected in the current image frame, the next frame image of the current image frame may be used as the reference image frame, and the processing device 12 may be configured to monitor the acquisition of the next frame image of the current image frame to obtain the acquisition moment of the reference image frame.

Through the above method, in both the condition that the processing device 12 records the acquisition moment of the image frame and the condition that it does not record the acquisition moment of the image frame, the marking moment of the target electrode sheet is determined without relying on an arrangement moment of the positioning mark.

Further, the processing device 12 is configured to acquire the transport duration required for movement of the electrode sheet roll by a target distance in the unwinding process, including: determining the target distance by using a preset distance between the image acquisition device 11 and the marking device, a position of the positioning mark in the current image frame, a distance between the positioning mark and the markable position, and a distance between the current image frame and the reference image frame; and determining the transport duration by using the target distance.

The image acquisition device 11 and the marking device are both arranged on the unwinding path of the electrode sheet roll. The distance between the two is a preset distance and may be adjusted according to actual needs. Detection regarding the positioning mark is performed on the current image frame, and the position of the positioning mark in the current image frame may also be obtained. The distance between the positioning mark and the markable position may be preset according to actual needs. Since a length of the electrode sheet roll acquired by the image frame may be a preset length, the distance between the current image frame and the reference image frame represents a distance the electrode sheet roll moves within the time interval between acquiring the current image frame and the reference image frame, which is determined based on the length of the electrode sheet roll that is acquired by a single image frame and the number of image frames between the two.

In a specific application scenario, the positioning mark may be a dividing mark. The part before the dividing mark belongs to the target electrode sheet, and the part after the dividing mark belongs to the next electrode sheet segment. The markable position may be a position at a certain distance before the dividing mark.

In a specific application scenario, the reference image frame may be the next image after the current image frame, and the distance between the reference image frame and the current image frame may be an electrode sheet length represented by one image.

It should be noted that the aforementioned distances and positions may represent distances in the movement direction of the electrode sheet roll, that is, distances in the length direction of the electrode sheet.

It should be noted that the image acquisition device 11 acquires the electrode sheet roll to obtain the current image frame. The current image frame is a partial image of the electrode sheet roll, and may contain an image of the operating position of the image acquisition device 11. According to the position of the positioning mark in the current image frame, the positioning mark may be associated with the operating position of the image acquisition device 11. For ease of understanding and simplified description, the operating position of the image acquisition device 11 is referred to as a position of the image acquisition device.

In a specific application scenario, under a condition that the reference image frame is the current image frame, the distance between the positioning mark and the position of the image acquisition device 11 may be determined by using the position of the positioning mark in the current image frame, and in combination with the distance between the positioning mark and the markable position and the preset distance between the image acquisition device 11 and the marking device, the distance between the markable position and the marking device at the acquisition moment of the current image frame may be determined, and then may be used as the target distance.

In a specific application scenario, under a condition that the reference image frame is not the current image frame, the distance between the positioning mark and the position of the image acquisition device 11 may be determined by using the position of the positioning mark in the current image frame, and in combination with the distance between the positioning mark and the markable position and the preset distance between the image acquisition device 11 and the marking device, the distance between the markable position and the marking device at the acquisition moment of the current image frame is determined. On this basis, in combination with the distance between the current image frame and the reference image frame, the target distance may be obtained.

Specifically, the target distance is a distance between the markable position of the target electrode sheet and the marking device at the acquisition moment of the reference image frame. The transport duration may be determined based on the target distance and a speed of the electrode sheet roll in the unwinding process.

Further, the image acquisition device 11 may perform image acquisition in response to a pulse signal output by the encoder 13. The processing device 12 determining the transport duration may include: dividing the target distance by a single-pulse precision of the encoder 13 to obtain a first pulse count used to characterize the transport duration. The processing device 12 is configured to use a sum of the acquisition moment of the reference image frame and the transport duration as the marking moment of the target electrode sheet, including: recording a pulse count of the encoder 13 each time the image acquisition device 11 acquires an image frame to obtain a second pulse count, where the second pulse count is a pulse count recorded at the acquisition moment of the reference image frame; and determining to trigger marking of the target electrode sheet at the marking moment under a condition that a moment at which a recorded pulse count reaches a sum of the first pulse count and the second pulse count is the marking moment.

In a specific application scenario, the target distance is expressed as D, and the first pulse count characterizing the transport duration may be Nb = D/P2. The single-pulse precision of the encoder 13 is P2 (unit: mm).

In some embodiments, a duration for the electrode sheet roll moving a reference distance may also be determined first, and combined with an interval duration between the acquisition moment of the current image frame and the acquisition moment of the reference image frame to obtain the transport duration. The reference distance is a distance between the markable position of the target electrode sheet and the marking device at the acquisition moment of the current image frame. Since the time interval between the acquisition moments of two adjacent image frames may be a preset value, the interval duration may be obtained through a preset time interval.

In an implementation scenario, the transport duration required for movement of the electrode sheet roll by a target distance in the unwinding process may be expressed as the first pulse count.

In some embodiments, the processing device 12 is configured to determine a current marking waiting time of the target electrode sheet as the transport duration at the acquisition moment of the reference image frame may include: starting from the acquisition moment of the reference image frame, waiting for the encoder 13 to output a pulse signal of the first pulse count before triggering marking of the target electrode sheet.

In some embodiments, the processing device 12 may record a pulse count of the encoder each time the image acquisition device 11 acquires an image frame. The processing device 12 using a sum of the acquisition moment of the reference image frame and the transport duration as the marking moment of the target electrode sheet may include: obtaining a second pulse count, and determining to trigger marking of the target electrode sheet under a condition that the recorded pulse count reaches a sum of the first pulse count and the second pulse count. The second pulse count is a pulse count recorded by the pulse recording device at the moment at which the image acquisition device 11 acquires the reference image frame.

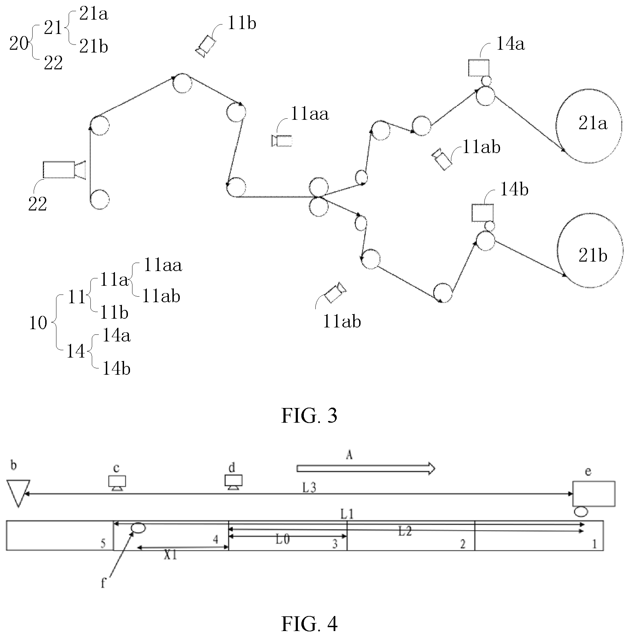

Referring to FIG. 3, FIG. 3 is a third schematic diagram of an electrode sheet marking system according to some embodiments of the present application.

The image acquisition device 11 included in the electrode sheet marking system 10 may be provided in plurality. The plurality of image acquisition devices 11 are respectively arranged at different positions and are configured to perform image acquisition at different positions on the transport path of the electrode sheet roll.

At least two of the plurality of image acquisition devices 11 serve as target image acquisition devices 11a. Each target image acquisition device 11a is configured to perform image acquisition on an electrode sheet roll in the unwinding process to obtain a current image frame of the target image acquisition device 11a.

The processing device 12 may also be configured to, in response to the determination of the marking moment of the target electrode sheet corresponding to one target image acquisition device 11a, update the marking moment of the target electrode sheet by using the latest determined marking moment of the target electrode sheet corresponding to the target image acquisition device 11a.

In some embodiments, the electrode sheet roll is also slit in the unwinding process. The target image acquisition device 11a includes a first target image acquisition device 11aa arranged before slitting the electrode sheet roll and a second target image acquisition device 11ab arranged after slitting the electrode sheet roll.

As shown in FIG. 3, four groups of image acquisition devices 11 are arranged in FIG. 3. The acquired image frames may be used for positioning mark detection and/or defect detection. These include the first target image acquisition device 11aa, two groups of second target image acquisition devices 11ab, and a non-target image acquisition device 11b arranged before slitting. According to the arrangement position, the non-target image acquisition device 11b may also be called a front-light camera, the first target image acquisition device 11aa may also be called a backlight camera, and the two groups of second target image acquisition devices 11ab may also be called slitting cameras. The images acquired by one or more of them may be used for defect detection, and the presence of defects on the electrode sheet may be judged from one angle or a plurality of angles.

In some embodiments, the electrode sheet marking system 10 is configured to mark the electrode sheet roll on an integrated die-cutting and slitting machine 20. The integrated die-cutting and slitting machine 20 may include an unwinding device (not shown in the figure), a winding device 21, and a marking arranging device 22, where the unwinding device and the winding device 21 are configured to unwind and wind the electrode sheet roll, and the marking arranging device 22 is configured to arrange a positioning mark on the electrode sheet. The integrated die-cutting and slitting machine 20 may further include a slitting device (not shown in the figure), and is arranged between the unwinding device and the winding device 21 and configured to slit the unwound electrode sheet roll along the length direction in the unwinding process to obtain at least two sub-electrode sheet rolls.

In some cases, the integrated die-cutting and slitting machine further includes several guide rollers, where the guide rollers are arranged between the unwinding device and the winding device 21 and are configured to convey the electrode sheet roll.

The electrode sheet roll is unwound by the unwinding device of the integrated die-cutting and slitting machine 20, and the positioning marks are arranged on the electrode sheet roll before unwinding. In the unwinding process of the electrode sheet roll, the marking arranging device 22 for arranging the positioning marks on the integrated die-cutting and slitting machine 20 is inactive.

The number of winding devices 21 included in the integrated die-cutting and slitting machine 20 may be consistent with the number of slit sub-electrode sheet rolls, so that each sub-electrode sheet roll is wound by the winding device 21 separately, and at least two rolls of sub-electrode sheet rolls are obtained. The target image acquisition device 11a may be arranged at a position before slitting, or at a position after slitting, or partially arranged before slitting and partially arranged after slitting. The number of the second target image acquisition devices 11ab arranged after slitting the electrode sheet roll may be consistent with the number of sub-electrode sheet rolls.

In a specific application scenario, the unwinding device is used to unwind an electrode sheet roll provided with a positioning mark, the image acquisition device 11 is used to acquire the electrode sheet in the unwinding process, and the winding device 21 is used to wind the electrode sheet roll.

In some embodiments, the electrode sheet marking system 10 further includes a marking device 14, where the marking device 14 is configured to perform marking on the electrode sheet roll. Under a condition that the electrode sheet roll is also slit in the unwinding process, the number of the marking devices 14 may be consistent with the number of sub-electrode sheet rolls obtained by slitting.

In some embodiments, the images acquired by the plurality of image acquisition devices 11 may also be used for defect detection.

In a specific application scenario, the marking arranging device 22 may be a laser.

Certainly, the electrode sheet marking system 10 according to the present application is not limited to being applied to the electrode sheet roll unwound on the aforementioned integrated die-cutting and slitting machine 20, and may also be applied to other electrode sheet rolls in the unwinding process.

As shown in FIG. 3, after the electrode sheet roll is cut by the slitting device, it is divided into a first sub-electrode sheet roll and a second sub-electrode sheet roll. The first sub-electrode sheet roll and the second sub-electrode sheet roll are rewound by the first winding device 21a and the second winding device 21b respectively. Marking is performed by the first marking device 14a and the second marking device 14b respectively.

In a specific application scenario, a laser is used to cut a Mark hole at regular intervals along the electrode sheet roll. A length of the electrode sheet between two Mark holes on the electrode sheet roll is a length of one cell electrode sheet. When the laser cuts a Mark hole, the moment information at that time may be recorded. Since the distance from the laser to the labeling machine is a fixed value, a duration of the Mark hole moving between the laser and the labeling machine is also a fixed value. Accordingly, the labeling machine is controlled to perform marking according to the moment information of cutting the Mark hole.

The electrode sheet marking system 10 according to the present application performs marking according to visual detection without relying on the moment at which the laser performs cutting. For example, the electrode sheet roll may be one with no Mark hole provided, and after being punched by the laser, the electrode sheet roll has been provided with positioning marks, that is, the marking moment may be determined by visual detection. For another example, the electrode sheet roll may be one with a Mark hole provided, and the marking moment may be determined by visual detection.

In a specific application scenario, after the electrode sheet roll undergoes a die-cutting detection process, during winding, due to misaligned winding, the electrode sheet is wrinkled, or the film roll is wound into a cannon barrel, or a limit switch of the marking machine is damaged causing the marking machine to crush the electrode sheet, or the electrode sheet moves out of the visual detection range and other reasons, defective electrode sheets fail to be marked. After the electrode sheets are transported to the winding station, batches of NG unmarked electrode sheets are found, leading to a hold on all electrode sheets produced in this stage. In this case, the electrode sheet roll may be unwound and rewound again. In this process, visual detection may be used to perform marking again. Compared with the prior art in which held electrode sheets are directly scrapped, the electrode sheet marking method according to the present application allows marking of an electrode sheet roll provided with a positioning mark. For example, held electrode sheets are reused through re-marking, which reduces waste of electrode sheets.

Referring to FIG. 4, FIG. 4 is a schematic diagram of a target distance according to some embodiments of the present application.

As shown in the figure, direction A in FIG. 4 is a tape running direction of the electrode sheet roll, and the tape running direction may represent a movement direction of the electrode sheet roll. A laser b, a backlight camera c, a slitting camera d, and a marking device e are arranged on the movement path of the electrode sheet roll.

The figure also shows the images acquired of the electrode sheet roll, namely, the first image 1 to the fifth image 5 in sequence. According to the tape running direction, the image acquisition sequence is from the first image 1 to the fifth image 5. For example, the fourth image 4 at the backlight camera c is the current image frame, and a positioning mark f is arranged on the fourth image 4. The positioning mark f may be a dividing mark, specifically a Mark hole. The part before the Mark hole is the current electrode sheet, and the part after the Mark hole is the next electrode sheet segment. The current image frame contains the Mark hole.

The backlight camera c is used as the image acquisition device 11 for illustration. The distance between the backlight camera c and the marking device e may be expressed as L1, the length of the image frame may be expressed as L0, the distance between the Mark hole and an edge of the current image frame close to the front in the tape running direction may be expressed as X1, and an edge of the current image frame close to the rear in the tape running direction may be deemed to be aligned with the position of the backlight camera c.

During acquisition of the current image frame, the distance between the Mark hole and the marking device e may be expressed as L1-(L0-X1). The distance between the markable position and the Mark hole is taken as L for illustration. The reference distance between the markable position and the marking device e may be expressed as D = L1-(L0-X1)-L.

If the current image frame is used as the reference image frame, L1-(L0-X1)-L may be used as the target distance, and a time for the electrode sheet roll to move the target distance L1-(L0-X1)-L is the transport duration.

If another image frame is used as the reference image frame, the target distance may be determined according to the reference distance and the distance between the reference image frame and the current image frame, and thus the transport duration for the electrode sheet roll to move the target distance may be determined.

For example, the next image frame after the current image frame may be selected as the reference image frame. For example, if the second image 2 in the figure is used as the current image frame, the third image 3 is the reference image frame. If the next image frame after the current image frame is selected as the reference image frame, the target distance may be expressed as L1-L0-(L0-X1)-L.

In some embodiments, the slitting camera d may also be used as the image acquisition device 11. The distance between the slitting camera d and the marking device e may be expressed as L2. For example, the distance between the Mark hole in the current image frame acquired by the slitting camera d and an edge close to the front in the tape running direction is X2. Thus, the reference distance D = L2-(L0-X2)-L may be obtained for obtaining the transport duration.

In some embodiments, under a condition that the backlight camera c and the slitting camera d are arranged as the image acquisition devices 11 at the same time, the backlight camera c and the slitting camera d may be respectively used as the target image acquisition devices 11a. The image frames containing the same positioning mark f acquired by the two are respectively used as the current image frames. The two respectively perform the determination from obtaining the current image frame to triggering the marking moment of the target electrode sheet. Then the final marking moment of the target electrode sheet may be obtained by combining the marking moment of the target electrode sheet corresponding to the backlight camera c and the marking moment of the target electrode sheet corresponding to the slitting camera d. For example, since the slitting camera d is at a rear position in the tape running direction, the marking moment of the target electrode sheet may be updated by using the marking moment determined by the slitting camera d.

It should be noted that in the two image frames containing the same positioning mark f acquired by the backlight camera c and the slitting camera d, the positions of the positioning marks f may be different, such as X1 and X2 cited in the previous example.

It should be understood that marking the electrode sheet may refer to marking defects on the electrode sheet, and certainly it may also be marking other aspects of the electrode sheet, for example, dimension marking. A mark may represent the attribute of the electrode sheet. For example, a defect mark may indicate that the electrode sheet is defective, and the defective electrode sheet may be excluded from use.

In some embodiments, in addition to determining the marking moment of the target electrode sheet, the electrode sheet marking method may further include determining whether the target electrode sheet needs to be marked. These two parts may be independent of each other, and there may be no dependency relationship in the execution order of the two parts. Certainly, the execution of these two parts may also be set according to their coordination relationship. The marking of the target electrode sheet may be determined by combining the two. The former determines the moment of marking, and the latter determines whether to perform marking.

For example, marking may be performed on each electrode sheet segment of the electrode sheet roll by default. The marking moment of the target electrode sheet may include the marking moment of each electrode sheet segment on the electrode sheet roll. Whether marking is required determines whether the marking of each electrode sheet segment needs to be retained or canceled.

For example, marking may not be performed on the electrode sheets of the electrode sheet roll by default. Determination is made on whether each electrode sheet segment on the electrode sheet roll needs to be marked, and for the electrode sheets determined to need marking, their marking moments may be determined.

The following description takes defect marking as an example. The same applies to other marks. The processing device 12 may further be configured to search a plurality of image frames acquired by the image acquisition device 11 for the electrode sheet roll for several image frames each including at least part of the target electrode sheet; perform defect detection on the target electrode sheet by using the several image frames each including at least part of the target electrode sheet to obtain a defect detection result of the target electrode sheet; and determine, based on the defect detection result of the target electrode sheet, whether to trigger the marking device to mark the target electrode sheet.

If marking is performed on each electrode sheet segment of the electrode sheet roll by default, the processing device 12 may, in response to the defect detection result indicating that no defect exists in the target electrode sheet, cancel sending of a marking signal of the target electrode sheet to the marking device, where the marking signal is used to instruct the marking device to mark that a defect exists in the target electrode sheet; and in response to the defect detection result indicating that a defect exists in the target electrode sheet, retain sending of a marking signal of the target electrode sheet to the marking device.

It should be understood that, taking the image frames acquired by the same image acquisition device 11 as an example, in the multiple image frames acquired by the same image acquisition device 11, the target electrode sheet may appear in one or more of the image frames. For example, one image contains the complete image of the target electrode sheet, or one image contains part of the image of the target electrode sheet, and another image contains the remaining part of the image of the target electrode sheet. The two images combined may obtain the complete image of the target electrode sheet.

The defect detection may be used to determine the presence of defects. The defect detection result of the target electrode sheet may indicate whether the target electrode sheet has a defect. Defect may include various forms, for example, dirty electrode sheet surface and wrinkled electrode sheet, which will not be enumerated herein.

In some embodiments, the processing device 12 may splice several image frames each including at least part of the target electrode sheet to obtain an image to be detected that contains the complete target electrode sheet, perform defect detection on the target electrode sheet contained in the image to be detected, and obtain a defect detection result of the target electrode sheet.

In some embodiments, the processing device 12 may perform defect detection on each image frame acquired by the same image acquisition device 11. According to the positioning marks f, the electrode sheets may be distinguished. The detection results belonging to the range of the target electrode sheet are merged to obtain the defect detection result of the target electrode sheet.

In a specific application scenario, the positioning mark f may be a dividing mark. The description is made by taking the dividing mark between the target electrode sheet and the subsequent electrode sheet segment as an example. If an image frame contains the dividing mark between the target electrode sheet and the subsequent electrode sheet segment, defects located before the dividing mark in the image frame belong to the target electrode sheet, and defects located after the dividing mark belong to the subsequent electrode sheet segment. The range of the target electrode sheet may be determined according to the dividing mark. The detection results belonging to the range of the target electrode sheet in each image frame are merged to obtain the defect detection result of the target electrode sheet.

In the above solution, the defect detection result of the image frame containing the target electrode sheet is used to determine, according to whether the target electrode sheet contains defects, whether to trigger the marking device to mark the target electrode sheet. This solution enables distinction between normal electrode sheets and defective electrode sheets for reference in subsequent processing, thereby reducing the impact caused by defective electrode sheets.

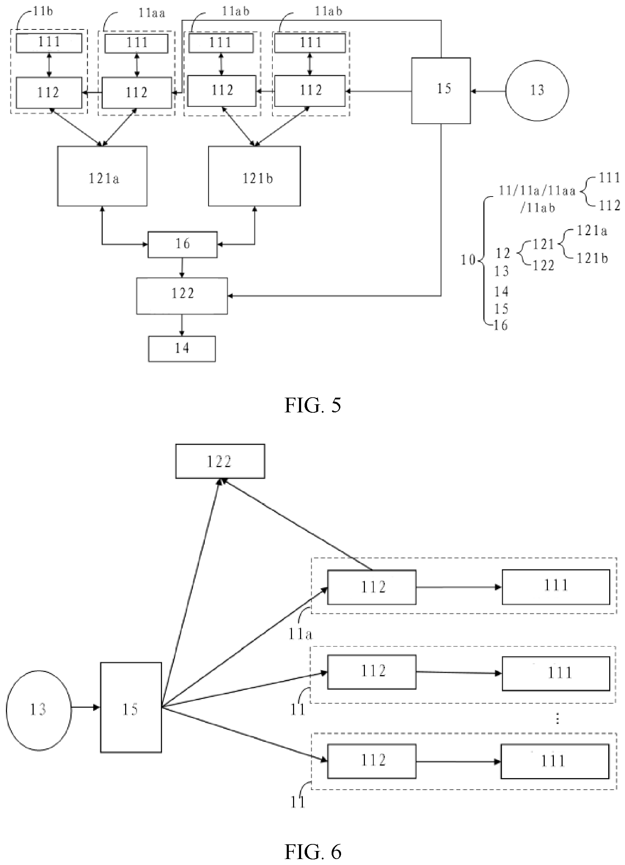

Referring to FIG. 5. FIG. 5 is a schematic diagram of electrical connections of an electrode sheet marking system according to some embodiments of the present application.

The processing device 12 may include an image detection device 121, or include an image detection device 121 and a marking control device 122. The latter is used as an example for illustration in the figure.

Under a condition that the processing device 12 includes the image detection device 121 and does not include the marking control device 122, the image detection device 121 is configured to: detect the current image frame, and under a condition that the positioning mark is detected in the current image frame, determine the marking moment of the target electrode sheet based on the acquisition moment of the reference image frame corresponding to the current image frame.

After obtaining the marking moment, the image detection device 121 may send a marking signal of the target electrode sheet to the marking device, so that the marking device performs marking at the marking moment, realizing marking at the markable position of the target electrode sheet.

Under a condition that the processing device 12 includes the image detection device 121 and the marking control device 122, the image detection device 121 and the marking control device 122 may be in communication connection. In some embodiments, the image detection device 121 is configured to detect the current image frame. Upon detecting that a positioning mark exists in the current image frame, the image detection device 121 sends a trigger signal to the marking control device 122. The marking control device 122 is configured to determine the marking moment of the target electrode sheet based on the acquisition moment of the reference image frame in response to the trigger signal. In some embodiments, the image detection device 121 is configured to detect the current image frame. Upon detecting that a positioning mark exists in the current image frame, the image detection device 121 obtains an intermediate parameter for determining the marking moment of the target electrode sheet and sends the intermediate parameter to the marking control device 122. The marking control device 122 is configured to determine the marking moment of the target electrode sheet by using the intermediate parameter.

After obtaining the marking moment, the marking control device 122 may send a marking signal of the target electrode sheet to the marking device, so that the marking device performs marking at the marking moment, realizing marking at the markable position of the target electrode sheet.

The determination of the marking moment of the target electrode sheet may be completed collaboratively by the image detection device 121 and the marking control device 122. The intermediate parameter is a parameter that may be used to determine the marking moment. Further, the intermediate parameter includes a target distance or a transport duration required for movement of the electrode sheet roll by a target distance in the unwinding process. The target distance is a distance between the markable position of the target electrode sheet and the marking device at the acquisition moment of the reference image frame.

In an implementation scenario, the intermediate parameter may include a target distance or a transport duration required for movement of the electrode sheet roll by a target distance in the unwinding process, where the target distance is a distance between the markable position of the target electrode sheet and the marking device at the acquisition moment of the reference image frame.

Certainly, the intermediate parameter is not limited to the target distance and transport duration cited above. The intermediate parameter may be any parameter that may be used to obtain the marking moment. For example, the intermediate parameter may also include a reference distance. The reference distance is a distance between the markable position of the target electrode sheet and the marking device at the acquisition moment of the current image frame. Since the distance between the current image frame and the reference image frame may be preset, the marking control device 122 also obtains the marking moment by using the reference distance in combination with the distance between the current image frame and the reference image frame. For example, the intermediate parameter may include the time consumption of the electrode sheet roll moving the reference distance. Since the interval between the acquisition moments of the image frames may be preset, the marking control device 122 may also obtain the marking moment by using the time consumption of the electrode sheet roll moving the reference distance in combination with the preset time interval.

It should be understood that the aforementioned target distance, transport duration, reference distance, and time consumption of the electrode sheet roll moving the reference distance may all be independently used to obtain the marking moment. The intermediate parameter may also include a plurality of parameters that are independently used to obtain the marking moment. Thus, the marking control device 122 may comprehensively determine the final marking moment based on the marking moments obtained respectively based on each parameter.

The image acquisition device 11 may include a camera 111 and an acquisition card 112.

In some embodiments, the image acquisition device 11 is provided in plurality. The plurality of image acquisition devices 11 are respectively arranged at different positions and are configured to perform image acquisition at different positions on the transport path of the electrode sheet roll. At least two of the plurality of image acquisition devices 11 serve as target image acquisition devices 11a. Each target image acquisition device 11a is configured to perform image acquisition on an electrode sheet roll in the unwinding process to obtain a current image frame of the target image acquisition device 11a. The acquisition cards 112 of at least some of the image acquisition devices 11 may also communicate with each other.

Correspondingly, the image detection device 121 is provided in plurality. Each image detection device 121 is configured to be communicatively coupled to at least one target image acquisition device 11a and at least configured to detect the current image frame of the connected target image acquisition device 11a.

As shown in FIG. 5, a non-target image acquisition device 11b, a first target image acquisition device 11aa, and two groups of second target image acquisition devices 11ab are arranged. A first image detection device 121a and a second image detection device 121b are arranged. The non-target image acquisition device 11b and the first target image acquisition device 11aa are communicatively coupled to the first image detection device 121a for detecting the current image frame acquired by the connected first target image acquisition device 11aa. The second image detection device 121b is communicatively coupled to the two groups of second target image acquisition devices 11ab for detecting the current image frames respectively acquired by the connected two groups of second target image acquisition devices 11ab.

In some embodiments, the electrode sheet marking system 10 further includes a marking device 14. The marking device 14 is communicatively coupled to the processing device 12. The marking device 14 is configured to perform marking on the electrode sheet roll. Specifically, the processing device 12 is further configured to send a marking instruction to the marking device 14 at the marking moment. The marking device 14 is configured to mark the target electrode sheet in response to the marking instruction. Further, the marking device 14 may be communicatively coupled to the marking control device 122.

The figure also shows that the electrode sheet marking system 10 further includes an encoder 13 and a signal distributor 15. The encoder 13 is coupled to the signal distributor 15. The signal distributor 15 is coupled to each image acquisition device 11 and the processing device 12. The encoder 13 is configured to output a pulse signal. The signal distributor 15 distributes pulse signals output by the encoder 13 to various receiving devices. For example, the signal distributor 15 distributes pulse signals output by the encoder 13 to the various image acquisition devices 11 to trigger image acquisition. The signal distributor 15 distributes pulse signals output by the encoder 13 to the processing device 12 for determining the current pulse signal.

The pulse signal output by the encoder 13 may be associated with the unwinding movement of the electrode sheet roll.

Further, the signal distributor 15 may be coupled to the acquisition card 112 in each image acquisition device 11. The signal distributor 15 may be coupled to the marking control device 122.

In a specific application scenario, the marking control device 122 may be a programmable logic controller (PLC). The image detection device 121 may be an industrial control computer. When the image detection device 121 is provided in multiple groups, a master industrial computer and slave industrial computers may be arranged. The marking device 14 may be a marking machine, which makes marks by means of inkjet or the like.

In some embodiments, the electrode sheet marking system 10 may further include a switch 16, where when the image detection device 121 is provided in plurality groups, the switch 16 is coupled to a plurality of groups of image detection devices 121 and the marking control device 122.

Referring to FIG. 6, FIG. 6 is a schematic diagram of signal connections of an electrode sheet marking system according to some embodiments of the present application.

The encoder 13 of the electrode sheet marking system 10 is coupled to the signal distributor 15. The signal distributor 15 is coupled to each image acquisition device 11 and distributes signals to each image acquisition device 11. As shown in the figure, there are a total of X image acquisition devices 11, and each image acquisition device 11 includes an acquisition card 112 and a camera 111. Specifically, the signal distributor 15 may be coupled to each acquisition card 112. The target image acquisition device 11a may be communicatively coupled to the marking control device 122.

Specifically, the acquisition card 112 may be communicatively coupled to the marking control device 122, which enables the image acquisition device 11 to send a notification signal so that the processing device 12 records the acquisition moment of the image frame and obtains the acquisition moment of the reference image frame.

In an implementation scenario, the camera 111 acquires the current image frame, the acquisition card 112 outputs a notification signal to the marking control device 122, and the marking control device 122 records the pulse count at that time in response to the notification signal to represent the acquisition moment of the acquired image frame.

In a specific application scenario, the marking control device 122 is a PLC. The PLC may record the real-time pulse signal of the encoder 13, which is denoted as Nt. After the camera 111 acquires the current image frame, the acquisition card 112 outputs a picture frame signal, i.e., outputs the frame signal, to the PLC. The PLC records the pulse count N at that time.

The above method enables the processing device 12 to receive the notification signal that the image acquisition device 11 acquires an image frame, and record the acquisition moment of the image frame in response to the notification signal to obtain the acquisition moment of the reference image frame.

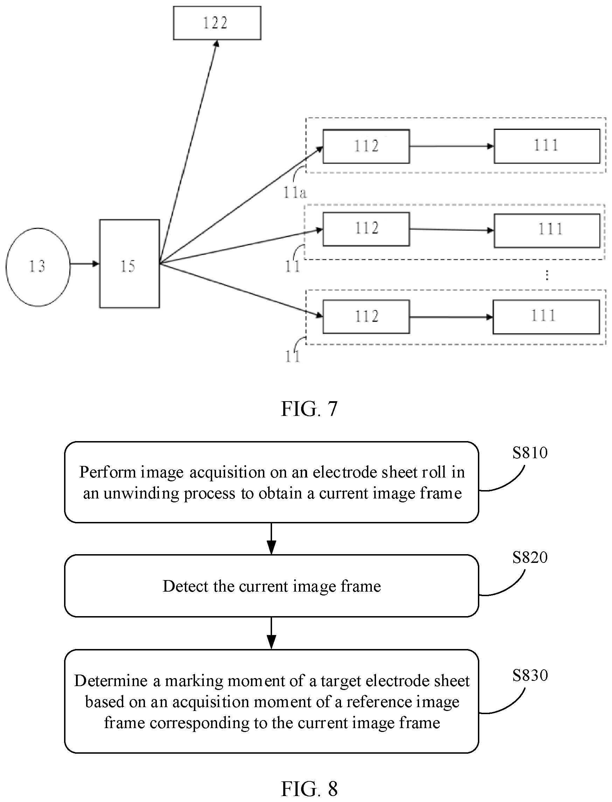

Referring to FIG. 7, FIG. 7 is another schematic diagram of signal connections of an electrode sheet marking system according to some embodiments of the present application.

Different from the embodiment shown in FIG. 6, the target image acquisition device 11a cannot communicate with the marking control device 122, so it is impossible to record the acquisition moment of the image frame through the notification signal from the image acquisition device 11. Specifically, this may be because the acquisition card 112 does not support outputting a notification signal, or the acquisition card 112 is not coupled to the marking control device 122.

In an implementation scenario, the acquisition moment of the reference image frame may be obtained by the image detection device 121 monitoring the acquisition moment of the reference image frame.

In the above method, the processing device 12 cannot receive a notification signal that the image acquisition device 11 has acquired an image frame, and record the acquisition moment of the image frame in response to the notification signal. The acquisition moment of the reference image frame may be obtained by monitoring the acquisition moment of the reference image frame.

Referring to FIG. 8, FIG. 8 is a schematic flowchart of an electrode sheet marking method according to some embodiments of the present application.

Step S810: Perform image acquisition on an electrode sheet roll in an unwinding process to obtain a current image frame.

The electrode sheet roll includes several electrode sheet segments, and the several electrode sheet segments are distinguished by corresponding positioning marks.

Step S820: Detect the current image frame.

Under a condition that the positioning mark is detected in the current image frame, step S830 is performed.

Step S830: Determine a marking moment of a target electrode sheet based on an acquisition moment of a reference image frame corresponding to the current image frame.

The target electrode sheet is an electrode sheet that is distinguished by the detected positioning mark. The reference image frame is the current image frame or another image frame obtained by acquiring the electrode sheet roll. The marking moment is a moment at which a marking device is triggered to mark the target electrode sheet.

For relevant descriptions of the above steps, reference may be made to the relevant content in the foregoing embodiments, and details are not repeated herein.

In some embodiments, the determining a marking moment of a target electrode sheet based on an acquisition moment of a reference image frame corresponding to the current image frame includes: obtaining a transport duration required for movement of the electrode sheet roll by a target distance in the unwinding process, where the target distance is a distance between a markable position of the target electrode sheet and the marking device at the acquisition moment of the reference image frame; and determining the marking moment of the target electrode sheet based on the transport duration and the acquisition moment of the reference image frame.

In some embodiments, the determining the marking moment of the target electrode sheet based on the transport duration and the acquisition moment of the reference image frame includes: using a sum of the acquisition moment of the reference image frame and the transport duration as the marking moment of the target electrode sheet, or determining a current marking waiting time of the target electrode sheet as the transport duration at the acquisition moment of the reference image frame.

In some embodiments, the step of using a sum of the acquisition moment of the reference image frame and the transport duration as the marking moment of the target electrode sheet may be performed under a condition that a notification signal for acquisition of an image frame is received and the acquisition moment of the image frame is recorded in response to the notification signal, where the reference image frame may be the current image frame.

In some embodiments, the step of determining a current marking waiting time of the target electrode sheet as the transport duration at the acquisition moment of the reference image frame is performed under a condition that a notification signal for acquisition of an image frame is not received, the reference image frame is another image frame after the current image frame, and before the determining a current marking waiting time of the target electrode sheet as the transport duration at the acquisition moment of the reference image frame, the method further includes: monitoring whether acquisition of the reference image frame is completed to obtain the acquisition moment of the reference image frame.

In some embodiments, the obtaining a transport duration required for movement of the electrode sheet roll by a target distance in the unwinding process includes: determining the target distance by using a preset distance between the image acquisition device and the marking device, a position of the positioning mark in the current image frame, a distance between the positioning mark and the markable position, and a distance between the current image frame and the reference image frame; and determining the transport duration by using the target distance.

In a specific application scenario, the step of performing image acquisition on an electrode sheet roll in an unwinding process is performed by performing image acquisition in response to a pulse signal output by an encoder. The target distance may be divided by a single-pulse precision of the encoder to obtain a first pulse count used to characterize the transport duration, so as to characterize the transport duration.

In some embodiments, a pulse count of the encoder may be recorded each time an image frame is acquired, so as to obtain a second pulse count. The second pulse count is a pulse count recorded at the acquisition moment of the reference image frame; and it is determined to trigger marking of the target electrode sheet under a condition that a recorded pulse count reaches a sum of the first pulse count and the second pulse count.

In some embodiments, at the acquisition moment of the reference image frame, marking of the target electrode sheet is triggered after waiting for the encoder to output a pulse signal of the first pulse count.

In some embodiments, the step of detecting the current image frame and, under a condition that the positioning mark is detected in the current image frame, determining the marking moment of the target electrode sheet based on the acquisition moment of the reference image frame corresponding to the current image frame is performed by an image detection device 121, or is performed cooperatively by the image detection device 121 and a marking control device 122.

Therefore, hardware devices are flexibly arranged according to actual application needs to realize determining the marking moment of the target electrode sheet based on the acquisition moment of the reference image frame corresponding to the current image frame, adapting to the needs of different application scenarios.

The following description takes the execution subject as the image detection device as an example. Specifically, the steps performed by the image detection device may include the following steps:
Step 1: Obtain a current image frame.
Step 2: Detect that a positioning mark exists in the current image frame.
Step 3: Trigger the determination of the marking moment of the target electrode sheet.

The current image frame may be obtained by the image acquisition device acquiring the electrode sheet roll in the unwinding process.

The target electrode sheet is an electrode sheet that is distinguished by the positioning mark detected in the current image frame. The acquisition moment of the reference image frame is a moment at which the image acquisition device acquires the reference image frame. The marking moment is a moment at which a marking device is triggered to mark the target electrode sheet.

The acquisition moment of the reference image frame corresponding to the current image frame is used as a reference for marking the target electrode sheet associated with the positioning mark in the current image frame, and the marking moment of the target electrode sheet is determined according to the reference.

In the above solution, on the basis of determining that the current image frame contains a positioning mark, the acquisition moment of the reference image frame associated with the current image frame is used as a reference, so as to obtain the marking moment of the target electrode sheet distinguished by the positioning mark in the current image frame. This solution allows determination of the marking moment of an electrode sheet provided with a positioning mark without relying on an arrangement operation of the positioning mark, so as to realize marking of an electrode sheet roll provided with a positioning mark.

The above method may be applied to an electrode sheet roll provided with a positioning mark but not subjected to detection and marking. It does not rely on an arrangement operation of the positioning marks but relies on visual detection to realize re-detection and re-marking of the electrode sheet roll. The electrode sheet roll that has completed re-detection and re-marking proceeds to subsequent processes. Compared with directly discarding the electrode sheet roll provided with a positioning mark but not subjected to detection and marking, this solution reduces waste and costs.

In some embodiments, the determination of the marking moment of the target electrode sheet may be completed by the aforementioned image detection device. Then the image detection device performing the triggering of the determination of the marking moment of the target electrode sheet may include triggering itself to determine the marking moment of the target electrode sheet based on the acquisition moment of the reference image frame.

In some embodiments, the determination of the marking moment of the target electrode sheet may be completed by a marking control device communicatively coupled to the image detection device. Thus, the image detection device performing the triggering of the determination of the marking moment of the target electrode sheet may include sending a trigger signal to the marking control device, so that the marking control device determines the marking moment of the target electrode sheet based on the acquisition moment of the reference image frame in response to the trigger signal.

In some embodiments, the determination of the marking moment of the target electrode sheet may be completed collaboratively by the aforementioned image detection device and a marking control device in communication connection therewith. Further, the image detection device performing the triggering of the marking moment of the target electrode sheet may include obtaining an intermediate parameter for determining the marking moment of the target electrode sheet and sending the intermediate parameter to the marking control device, so that the marking control device may determine the marking moment of the target electrode sheet by using the intermediate parameter.

It should be noted that the marking moment of the target electrode sheet may be determined in any one of the following methods: independently completed by the image detection device, independently completed by the marking control device, or collaboratively completed by the image detection device and the marking control device. Certainly, the determination of the marking moment of the target electrode sheet is not limited to adopting one method, and the above plurality of methods may also be adopted respectively, and the final marking moment is comprehensively obtained according to the results obtained by the plurality of methods respectively.

In the above solution, under a condition that the current image frame is determined to contain a positioning mark, the image detection device may independently determine the marking moment of the target electrode sheet, may also trigger the marking control device to independently determine the marking moment of the target electrode sheet, and may also collaboratively determine the marking moment of the target electrode sheet with the marking control device. The image detection device, the image detection device, and the marking control device is flexibly configured to adapt to different application scenarios.

In some embodiments, the marking moment may be used to trigger the marking device to perform marking at the marking moment. Specifically, a marking signal may be sent to the marking device to trigger the marking device to operate. The marking signal may be sent by the image detection device or may be sent by the marking control device.

The following description takes the step of determining the marking moment being performed by the image detection device as an example. Specifically, the determination of the marking moment may include:
Step 1: Obtain the transport duration required for movement of the electrode sheet roll by a target distance in the unwinding process.
Step 2: Determine the marking moment of the target electrode sheet based on the transport duration and the acquisition moment of the reference image frame.

The target distance may be the distance between the markable position of the target electrode sheet and the marking device at the acquisition moment of the reference image frame.

The markable position may be arranged according to actual needs, and may be a certain range or a determined position, so as to adapt to various needs.

In some embodiments, the transport duration may be added to the acquisition moment of the reference image frame, and the obtained moment may be used as the marking moment of the target electrode sheet. Alternatively, at the acquisition moment of the reference image frame, the determined transport duration may be used as the current marking waiting time of the target electrode sheet, that is, starting from the acquisition moment of the reference image frame, the marking device is triggered to mark after waiting for the current marking waiting time.

Further, the method of adding the transport duration to the acquisition moment of the reference image frame and using the obtained moment as the marking moment of the target electrode sheet may be performed under a condition that the acquisition moment of the image frame is recorded through the notification signal of the image acquisition device.

Further, the target device may be used to receive a notification signal that the image acquisition device acquires an image frame, and record the acquisition moment of the image frame in response to the notification signal. The target device may be an image detection device or a marking control device communicatively coupled to the image detection device.

Through the above method, in both the condition that the target device records the acquisition moment of the image frame and the condition that it does not record the acquisition moment of the image frame, the marking moment of the target electrode sheet is determined without relying on an arrangement moment of the positioning mark.

In some embodiments, under a condition that the target device records the acquisition moment of the image frame through the notification signal of the image acquisition device, certainly, other image frames other than the current image frame may also be selected as the reference image frame.

Further, the method of using the transport duration as the current marking waiting time of the target electrode sheet at the acquisition moment of the reference image frame may be performed under a condition that the acquisition moment of the image frame cannot be recorded through the notification signal of the image acquisition device. Specifically, the target device cannot receive a notification signal that the image acquisition device acquires an image frame.

It should be understood that since the target device cannot record the acquisition moment of the current image frame through the notification signal of the image acquisition device, the acquisition moment of the current image frame cannot be determined, so it cannot be used as the reference image frame. The image that has not been acquired yet after the current image frame may be used as the reference image frame. After determining that a positioning mark exists in the current image frame, the acquisition moment of the reference image frame is obtained as a reference for the positioning moment. Specifically, before the determining at the acquisition moment of the reference image frame that the current marking waiting time of the target electrode sheet is the transport duration, the image detection device may further perform: monitoring whether acquisition of the reference image frame is completed to obtain the acquisition moment of the reference image frame.

In some embodiments, the aforementioned step of determining the marking moment may also be performed by the marking control device.

The following description takes the step of determining the transport duration being performed by the image detection device as an example. Specifically, the determination of the transport duration may include the following steps:
Step 1: Determine the target distance by using a preset distance between the image acquisition device and the marking device, a position of the positioning mark in the current image frame, a distance between the positioning mark and the markable position, and a distance between the current image frame and the reference image frame.
Step 2: Determine the transport duration by using the target distance.

The image acquisition device and the marking device are both arranged on the unwinding path of the electrode sheet roll. The distance between the two is a preset distance and may be adjusted according to actual needs. Detection regarding the positioning mark is performed on the current image frame, and the position of the positioning mark in the current image frame may also be obtained. The distance between the positioning mark and the markable position may be preset according to actual needs. Since a length of the electrode sheet roll acquired by the image frame may be a preset length, the distance between the current image frame and the reference image frame represents a distance the electrode sheet roll moves within the time interval between acquiring the current image frame and the reference image frame, which is determined based on the length of the electrode sheet roll that is acquired by a single image frame and the number of image frames between the two.

In some embodiments, the aforementioned step of determining the transport duration may also be performed by the marking control device.

The following description takes the execution subject as the image detection device as an example. Specifically, the steps performed by the image detection device may include the following steps:
Step 1: Obtain a current image frame.
Step 2: Detect that a positioning mark exists in the current image frame.
Step 3: Send a trigger signal to the marking control device.

For the above steps 1 to 3, reference may be made to the relevant descriptions in the foregoing embodiments. In this embodiment, the determination of the marking moment of the target electrode sheet may be independently completed by the marking control device. The image detection device may be communicatively coupled to the marking control device. Under a condition that the image detection device detects that a positioning mark exists in the current image frame, it may send a trigger signal to the marking control device to trigger the marking control device to determine the marking moment of the target electrode sheet based on the acquisition moment of the reference image frame.

The following description takes defect marking as an example. The same applies to other marks, which will not be enumerated herein. The following steps 4 to 6 may be used to determine whether the target electrode sheet needs to be marked with a defect mark. Determining whether the target electrode sheet needs to be marked may be performed by the image detection device.

Step 4: Search a plurality of image frames acquired by the same image acquisition device for the electrode sheet roll for several image frames each including at least part of the target electrode sheet.

Step 5: Perform defect detection on the target electrode sheet by using the several image frames each including at least part of the target electrode sheet to obtain a defect detection result of the target electrode sheet.

Step 6: Determine, based on the defect detection result of the target electrode sheet, whether to trigger the marking device to mark the target electrode sheet.

Step 7: Trigger the marking device to mark the target electrode sheet.

Triggering the marking device to mark the target electrode sheet may be performed by the image detection device or by the marking control device. Triggering the marking device to mark the target electrode sheet may be performed on the basis of the marking moment and the result of determining whether to trigger the marking device to mark the target electrode sheet.

In the above solution, the defect detection result of the image frame containing the target electrode sheet is used to determine, according to whether the target electrode sheet contains defects, whether to trigger the marking device to mark the target electrode sheet. This solution enables distinction between normal electrode sheets and defective electrode sheets for reference in subsequent processing, thereby reducing the impact caused by defective electrode sheets.

In some embodiments, after determining whether to trigger the marking device to mark the target electrode sheet, the image detection device may notify the marking control device. If the target electrode sheet needs to be marked, the marking control device sends a marking signal of the target electrode sheet to the marking device, so that the marking device performs marking at the marking moment, realizing marking at the markable position of the target electrode sheet.

The following description takes the execution subject as the image detection device as an example. Specifically, the image detection device may perform the following steps:
Step 1: Obtain a current image frame.
Step 2: Detect that a positioning mark exists in the current image frame.
Step 3: Obtain an intermediate parameter for determining the marking moment of the target electrode sheet, and send the intermediate parameter to the marking control device.

For the above steps, reference may be made to the relevant descriptions in the foregoing embodiments. In this embodiment, the determination of the marking moment of the target electrode sheet may be completed collaboratively by the image detection device and the marking control device. Specifically, the image detection device is configured to obtain an intermediate parameter for determining the marking moment of the target electrode sheet, and the marking control device may be configured to determine the marking moment of the target electrode sheet by using the intermediate parameter.

The intermediate parameter may include a plurality of parameters that are independently used to obtain the marking moment. Then the marking control device may comprehensively determine the final marking moment based on the marking moments obtained respectively based on the various parameters.

In the above solution, the image detection device obtains the target distance or the transport duration as an intermediate parameter, so that the marking control device may obtain the marking moment based on the intermediate parameter, realizing collaborative determination of the marking moment by the image detection device and the marking control device.

In a specific application scenario, under a condition that the acquisition moment of the image frame may be recorded through the notification signal of the image acquisition device, the current image frame may be used as the reference image frame. Under a condition that the image detection device detects that a positioning mark exists in the current image frame, it may determine the target distance and send the target distance as an intermediate parameter to the marking control device, so that the marking control device may determine the marking moment of the target electrode sheet according to the target distance in combination with the recorded acquisition moment of the current image frame. In addition, the marking moment of the target electrode sheet may be provided to the device that triggers the marking device to perform marking for subsequent use.

In a specific application scenario, under a condition that the acquisition moment of the image frame cannot be recorded through the notification signal of the image acquisition device, the next image frame after the current image frame may be used as the reference image frame. Under a condition that the image detection device detects that a positioning mark exists in the current image frame, it may determine the target distance and send the target distance as an intermediate parameter to the marking control device, so that the marking control device determines the marking moment of the target electrode sheet according to the target distance in combination with the monitored acquisition moment of the current image frame.

In a specific application scenario, the determination of the marking moment of the target electrode sheet may be independently completed by the image detection device. Thus, the image detection device performing the triggering of the determination of the marking moment of the target electrode sheet may include the aforementioned steps of obtaining the transport duration and determining the marking moment of the target electrode sheet based on the transport duration and the acquisition moment of the reference image frame. Further, the image detection device determines the target distance by using a preset distance between the image acquisition device and the marking device, a position of the positioning mark in the current image frame, a distance between the positioning mark and the markable position, and a distance between the current image frame and the reference image frame, determines the transport duration by using the target distance, and determines the marking moment of the target electrode sheet based on the transport duration and the acquisition moment of the reference image frame.

In a specific application scenario, the determination of the marking moment of the target electrode sheet may be independently completed by a marking control device communicatively coupled to the image detection device. Thus, the image detection device performing the triggering of the determination of the marking moment of the target electrode sheet may include sending a trigger signal to the marking control device, so that the marking control device determines the marking moment of the target electrode sheet based on the acquisition moment of the reference image frame in response to the trigger signal. The marking control device performs the aforementioned steps of obtaining the transport duration and determining the marking moment of the target electrode sheet based on the transport duration and the acquisition moment of the reference image frame. Further, the marking control device determines the target distance by using a preset distance between the image acquisition device and the marking device, a position of the positioning mark in the current image frame, a distance between the positioning mark and the markable position, and a distance between the current image frame and the reference image frame, determines the transport duration by using the target distance, and determines the marking moment of the target electrode sheet based on the transport duration and the acquisition moment of the reference image frame.

In a specific application scenario, the determination of the marking moment of the target electrode sheet may be completed collaboratively by the image detection device and a marking control device in communication connection therewith. Further, the image detection device performing the triggering of the marking moment of the target electrode sheet may include obtaining an intermediate parameter for determining the marking moment of the target electrode sheet and sending the intermediate parameter to the marking control device, so that the marking control device may determine the marking moment of the target electrode sheet by using the intermediate parameter. The marking control device is configured to perform determining the marking moment of the target electrode sheet by using the intermediate parameter.

The following description takes the execution subject as the marking control device as an example. Specifically, the method may include the following steps:
Step 1: Receive a moment determination signal regarding the target electrode sheet sent by the image detection device.
Step 2: Determine the marking moment of the target electrode sheet based on the acquisition moment of the reference image frame corresponding to the current image frame.

For the relevant description of the above step 2, reference may be made to the relevant content in the foregoing embodiments. The moment determination signal may be sent under a condition that the image detection device detects that a positioning mark exists in the current image frame. The current image frame is obtained by the image acquisition device acquiring the electrode sheet roll in the unwinding process. The positioning mark is used to distinguish the electrode sheets in the electrode sheet roll. The target electrode sheet is an electrode sheet that is distinguished by the positioning mark detected by the image detection device in the current image frame.

It should be understood that the moment determination signal regarding the target electrode sheet may be used to prompt the marking control device to determine the marking moment of the target electrode sheet.

The reference image frame may be the current image frame or another image frame obtained by acquiring the electrode sheet roll. The marking moment may be a moment at which a marking device is triggered to mark the target electrode sheet.

In the above solution, on the basis that the image detection device determines that the current image frame contains a positioning mark, the marking control device may use the acquisition moment of the reference image frame associated with the current image frame as a reference, so as to obtain the marking moment of the target electrode sheet distinguished by the positioning mark in the current image frame. This solution allows determination of the marking moment of an electrode sheet provided with a positioning mark without relying on an arrangement moment of the positioning mark, so as to realize marking of an electrode sheet roll provided with a positioning mark.

Specifically, the determining the marking moment of the target electrode sheet based on the acquisition moment of the reference image frame corresponding to the current image frame may include: obtaining a transport duration required for movement of the electrode sheet roll by a target distance in the unwinding process, and determining the marking moment of the target electrode sheet based on the transport duration and the acquisition moment of the reference image frame.

In the above solution, by using the acquisition moment of the reference image frame as a reference, the transport duration for the markable position of the target electrode sheet to move from the position at the acquisition moment of the reference image frame to the marking device is determined, and the marking moment of the target electrode sheet is determined. This solution allows the marking moment of the markable position of the target electrode sheet to be determined without relying on an arrangement moment of the positioning mark, thereby improving accuracy of the marking position of the electrode sheet.

Further, the moment determination signal is the trigger signal in the foregoing embodiments. After determining that the image detection device determines that a positioning mark exists in the current image frame, the determination of the marking moment of the target electrode sheet may be independently performed by the marking control device. The obtaining the transport duration required for movement of the electrode sheet roll by a target distance in the unwinding process may include: determining the target distance by using a preset distance between the image acquisition device and the marking device, a position of the positioning mark in the current image frame, a distance between the positioning mark and the markable position, and a distance between the current image frame and the reference image frame.

The position of the positioning mark in the current image frame may be obtained during the process of performing positioning mark detection on the current image frame, and may be obtained from the trigger signal of the image detection device. The preset distance between the image acquisition device and the marking device, the distance between the positioning mark and the markable position, and the distance between the current image frame and the reference image frame may be preset.

Further, after determining that the image detection device determines that a positioning mark exists in the current image frame, the determination of the marking moment of the target electrode sheet may be completed collaboratively by the marking control device and the image detection device. The moment determination signal may include an intermediate parameter determined by the image detection device. The marking control device may obtain the intermediate parameter from the moment determination signal and obtain the transport duration by using the intermediate parameter, where the intermediate parameter may be the target distance or the transport duration.

In the above solution, on the basis that the image detection device determines that the current image frame contains a positioning mark, the execution device may independently determine the marking moment, or collaborate with the image detection device. The image detection device determines the intermediate parameter, and the execution device determines the marking moment based on the intermediate parameter. The execution device, the execution device and the image detection device may be flexibly arranged to adapt to different application scenarios.

In some embodiments, under a condition that the target device may receive a notification signal that the image acquisition device acquires an image frame and record the acquisition moment of the image frame in response to the notification signal, the determining the marking moment of the target electrode sheet based on the transport duration and the acquisition moment of the reference image frame includes: using a sum of the acquisition moment of the reference image frame and the transport duration as the marking moment of the target electrode sheet. The target device may be the marking control device.

In the above solution, under a condition that the target device records the acquisition moment of the image frame, the current image frame may be selected as the reference image frame, and the recorded acquisition moment of the reference image frame is directly used in combination with the transport duration to obtain an accurate time point of the marking moment, so as to determine the marking moment of the target electrode sheet without relying on an arrangement moment of the positioning mark.

In some embodiments, under a condition that the target device cannot receive a notification signal that the image acquisition device acquires an image frame, the determining the marking moment of the target electrode sheet based on the transport duration and the acquisition moment of the reference image frame includes: determining a current marking waiting time of the target electrode sheet as the transport duration at the acquisition moment of the reference image frame, where the reference image frame is another image frame after the current image frame. The target device may be the marking control device.

In the above solution, under a condition that the target device cannot record the acquisition moment of the image frame, the acquisition moment of the reference image frame that has not been acquired yet after the current image frame containing the positioning mark may also be used to obtain the acquisition moment of the reference image frame, and the moment after waiting for the transport duration is determined as the marking moment, so as to determine the marking moment of the target electrode sheet without relying on an arrangement moment of the positioning mark.

The above descriptions of the various embodiments tend to emphasize the differences between the various embodiments. The same or similar points may be referred to each other. For the sake of brevity, details are not repeated herein.

In the several embodiments provided in the present application, it should be understood that the disclosed methods and apparatuses may be implemented in other ways. For example, the device embodiments described above are only schematic. For example, the division of modules or units is only a logical function division. In actual implementation, there may be other division methods. For example, units or components may be combined or integrated into another subsystem, or some features may be ignored or not executed. Another point is that the mutual coupling or direct coupling or communication connection shown or discussed may be through some interfaces, and the indirect coupling or communication connection of devices or units may be in electrical, mechanical or other forms.

In addition, each functional unit in each embodiment of the present application may be integrated into one processing unit, or each unit may exist physically alone, or two or more units may be integrated into one unit. The above integrated unit may be implemented in the form of hardware or in the form of software functional units. If the integrated unit is implemented in the form of a software functional unit and sold or used as an independent product, it may be stored in a computer-readable storage medium. Based on such understanding, the technical solution of the present application essentially or the part that contributes to the prior art or all or part of the technical solution may be embodied in the form of a software product. The computer software product is stored in a storage medium and includes several instructions to enable a computer device (which may be a personal computer, a server, a network device, or the like) or a processor (processor) to execute all or part of the steps of the methods in the various embodiments of the present application. The aforementioned storage medium includes: U disk, mobile hard disk, read-only memory (ROM, Read-Only Memory), random access memory (RAM, Random Access Memory), magnetic disk or optical disk and other media that stores program codes.

## Claims

1. An electrode sheet marking system, **characterized in that** the system comprises:
an image acquisition device configured to perform image acquisition on an electrode sheet roll in an unwinding process to obtain a current image frame, wherein the electrode sheet roll comprises several electrode sheet segments, and the several electrode sheet segments are distinguished by corresponding positioning marks; and
a processing device communicatively coupled to the image acquisition device, and configured to: detect the current image frame, and under a condition that the positioning mark is detected in the current image frame, determine a marking moment of a target electrode sheet based on an acquisition moment of a reference image frame corresponding to the current image frame, wherein the target electrode sheet is an electrode sheet that is distinguished by the detected positioning mark, the reference image frame is the current image frame or another image frame obtained by acquiring the electrode sheet roll, and the marking moment is a moment at which a marking device is triggered to mark the target electrode sheet.

2. The system according to claim 1, **characterized in that** the processing device is configured to determine a marking moment of a target electrode sheet based on an acquisition moment of a reference image frame corresponding to the current image frame, comprising:
obtaining a transport duration required for movement of the electrode sheet roll by a target distance in the unwinding process, wherein the target distance is a distance between a markable position of the target electrode sheet and the marking device at the acquisition moment of the reference image frame; and
determining the marking moment of the target electrode sheet based on the transport duration and the acquisition moment of the reference image frame.

3. The system according to claim 2, **characterized in that** the processing device is configured to determine the marking moment of the target electrode sheet based on the transport duration and the acquisition moment of the reference image frame, comprising:
using a sum of the acquisition moment of the reference image frame and the transport duration as the marking moment of the target electrode sheet, or determining a current marking waiting time of the target electrode sheet as the transport duration at the acquisition moment of the reference image frame.

4. The system according to claim 3, **characterized in that** the image acquisition device is further configured to send a notification signal to the processing device in response to acquisition of an image frame; and
the reference image frame is the current image frame, and the processing device is further configured to receive a notification signal that the image acquisition device acquires an image frame, and record the acquisition moment of the image frame in response to the notification signal to obtain the acquisition moment of the reference image frame, wherein the acquisition moment of the reference image frame is used for summing with the transport duration to serve as the marking moment of the target electrode sheet.

5. The system according to claim 4, **characterized in that** the image acquisition device comprises:
a camera configured to perform image acquisition on an electrode sheet roll in an unwinding process to obtain an image frame; and
an acquisition card communicatively coupled to the camera and the processing device, and configured to: send a notification signal to the processing device in response to acquisition of an image frame, and send the image frame to the processing device, so that the processing device detects the current image frame.

6. The system according to claim 4, **characterized in that** the electrode sheet marking system further comprises an encoder, wherein the encoder is communicatively coupled to the processing device and the image acquisition device and is configured to output a pulse signal to each of the processing device and the image acquisition device;
the image acquisition device is configured to perform image acquisition in response to the pulse signal; and
the processing device is configured to record the acquisition moment of the image frame in response to the notification signal, comprising:
recording a pulse count corresponding to pulses output by the encoder at the acquisition moment of the image frame in response to the notification signal.

7. The system according to claim 3, **characterized in that** the reference image frame is another image frame after the current image frame, and the processing device is further configured to, under a condition that the positioning mark is detected in the current image frame, monitor whether acquisition of the reference image frame is completed to obtain the acquisition moment of the reference image frame, wherein the acquisition moment of the reference image frame is used as a starting moment of the current marking waiting time of the target electrode sheet to obtain the marking moment of the target electrode sheet.

8. The system according to claim 3, **characterized in that** the processing device is configured to obtain a transport duration required for movement of the electrode sheet roll by a target distance in the unwinding process, comprising:
determining the target distance by using a preset distance between the image acquisition device and the marking device, a position of the positioning mark in the current image frame, a distance between the positioning mark and the markable position, and a distance between the current image frame and the reference image frame; and
determining the transport duration by using the target distance.

9. The system according to claim 8, **characterized in that** the electrode sheet marking system further comprises an encoder, wherein the encoder is communicatively coupled to the image acquisition device and is configured to output a pulse signal to the image acquisition device;
the image acquisition device is configured to perform image acquisition in response to the pulse signal;
the processing device is configured to determine the transport duration by using the target distance, comprising:
dividing the target distance by a single-pulse precision of the encoder to obtain a first pulse count used to characterize the transport duration; and
the processing device is configured to use a sum of the acquisition moment of the reference image frame and the transport duration as the marking moment of the target electrode sheet, comprising:
recording a pulse count of the encoder each time the image acquisition device acquires an image frame to obtain a second pulse count, wherein the second pulse count is a pulse count recorded at the acquisition moment of the reference image frame; and
determining to trigger marking of the target electrode sheet under a condition that a recorded pulse count reaches a sum of the first pulse count and the second pulse count.

10. The system according to claim 8, **characterized in that** the electrode sheet marking system further comprises an encoder, wherein the encoder is communicatively coupled to the image acquisition device and the processing device and is configured to output a pulse signal to each of the processing device and the image acquisition device;
the image acquisition device is configured to perform image acquisition in response to the pulse signal;
the processing device is configured to determine the transport duration by using the target distance, comprising:
dividing the target distance by a single-pulse precision of the encoder to obtain a first pulse count used to characterize the transport duration; and
the processing device is configured to determine a current marking waiting time of the target electrode sheet as the transport duration at the acquisition moment of the reference image frame, comprising:
at the acquisition moment of the reference image frame, waiting for the encoder to output a pulse signal of the first pulse count before triggering marking of the target electrode sheet.

11. The system according to claim 1, **characterized in that** the processing device is further configured to:
search a plurality of image frames acquired by the image acquisition device for the electrode sheet roll for several image frames each comprising at least part of the target electrode sheet;
perform defect detection on the target electrode sheet by using the several image frames each comprising at least part of the target electrode sheet to obtain a defect detection result of the target electrode sheet; and
determine, based on the defect detection result of the target electrode sheet, whether to trigger the marking device to mark the target electrode sheet.

12. The system according to claim 11, **characterized in that** the processing device is configured to determine, based on the defect detection result of the target electrode sheet, whether to trigger the marking device to mark the target electrode sheet, comprising:
in response to the defect detection result indicating that no defect exists in the target electrode sheet, canceling sending of a marking signal of the target electrode sheet to the marking device, wherein the marking signal is used to instruct the marking device to mark that a defect exists in the target electrode sheet; and
in response to the defect detection result indicating that a defect exists in the target electrode sheet, retaining sending of a marking signal of the target electrode sheet to the marking device.

13. The system according to claim 1, **characterized in that** the image acquisition device is provided in plurality, and the plurality of image acquisition devices are respectively arranged at different positions and are configured to perform image acquisition at different positions on a transport path of the electrode sheet roll; and at least two of the plurality of image acquisition devices serve as target image acquisition devices, and each of the target image acquisition devices is configured to perform image acquisition on an electrode sheet roll in the unwinding process to obtain a current image frame of the target image acquisition device; and
the processing device is further configured to:
in response to determination of a marking moment of the target electrode sheet corresponding to one target image acquisition device, update the marking moment of the target electrode sheet by using a latest determined marking moment of the target electrode sheet corresponding to the target image acquisition device.

14. The system according to claim 13, **characterized in that** the target image acquisition device comprises a first target image acquisition device arranged before slitting the electrode sheet roll and a second target image acquisition device arranged after slitting the electrode sheet roll.

15. The system according to claim 1, **characterized in that** the electrode sheet roll is unwound by an unwinding device of an integrated die-cutting and slitting machine, and the positioning mark is arranged on the electrode sheet roll before unwinding, and in the unwinding process of the electrode sheet roll, a marking arranging device for arranging the positioning mark in the integrated die-cutting and slitting machine is inactive; and/or
the positioning mark is a dividing mark for dividing two adjacent electrode sheet segments; and/or
the another image frame is obtained by acquiring the electrode sheet roll after the current image frame.

16. The system according to claim 1, **characterized in that** the processing device comprises:
an image detection device configured to: detect the current image frame, and under a condition that the positioning mark is detected in the current image frame, determine the marking moment of the target electrode sheet based on the acquisition moment of the reference image frame corresponding to the current image frame; or
the processing device comprises:
an image detection device and a marking control device that are communicatively connected, wherein the image detection device is configured to: detect the current image frame, and upon detecting that the positioning mark exists in the current image frame, send a trigger signal to the marking control device, and the marking control device is configured to determine the marking moment of the target electrode sheet based on the acquisition moment of the reference image frame in response to the trigger signal; or
the processing device comprises:
an image detection device and a marking control device that are communicatively connected, wherein the image detection device is configured to: detect the current image frame, and upon detecting that the positioning mark exists in the current image frame, obtain an intermediate parameter for determining the marking moment of the target electrode sheet and send the intermediate parameter to the marking control device, and the marking control device is configured to determine the marking moment of the target electrode sheet by using the intermediate parameter.

17. The system according to claim 16, **characterized in that** the intermediate parameter comprises a target distance or a transport duration required for movement of the electrode sheet roll by a target distance in the unwinding process, wherein the target distance is a distance between a markable position of the target electrode sheet and the marking device at the acquisition moment of the reference image frame.

18. The system according to claim 16, **characterized in that** the image acquisition device is provided in plurality, and the plurality of image acquisition devices are respectively arranged at different positions and are configured to perform image acquisition at different positions on a transport path of the electrode sheet roll; and at least two of the plurality of image acquisition devices serve as target image acquisition devices, and each of the target image acquisition devices is configured to perform image acquisition on an electrode sheet roll in the unwinding process to obtain a current image frame of the target image acquisition device; and
the image detection device is provided in plurality, and each of the image detection devices is configured to be communicatively coupled to at least one target image acquisition device and at least configured to detect a current image frame of the connected target image acquisition device.

19. The system according to claim 1, **characterized in that** the system further comprises a marking device, wherein the marking device is communicatively coupled to the processing device, the processing device is further configured to send a marking instruction to the marking device at the marking moment, and the marking device is configured to mark the target electrode sheet in response to the marking instruction.

20. An electrode sheet marking method, **characterized in that** the method comprises:
performing image acquisition on an electrode sheet roll in an unwinding process to obtain a current image frame, wherein the electrode sheet roll comprises several electrode sheet segments, and the several electrode sheet segments are distinguished by corresponding positioning marks; and
detecting the current image frame, and under a condition that the positioning mark is detected in the current image frame, determining a marking moment of a target electrode sheet based on an acquisition moment of a reference image frame corresponding to the current image frame, wherein the target electrode sheet is an electrode sheet that is distinguished by the detected positioning mark, the reference image frame is the current image frame or another image frame obtained by acquiring the electrode sheet roll, and the marking moment is a moment at which a marking device is triggered to mark the target electrode sheet.

21. The method according to claim 20, **characterized in that** the determining a marking moment of a target electrode sheet based on an acquisition moment of a reference image frame corresponding to the current image frame comprises:
obtaining a transport duration required for movement of the electrode sheet roll by a target distance in the unwinding process, wherein the target distance is a distance between a markable position of the target electrode sheet and the marking device at the acquisition moment of the reference image frame; and
determining the marking moment of the target electrode sheet based on the transport duration and the acquisition moment of the reference image frame.

22. The method according to claim 21, **characterized in that** the determining the marking moment of the target electrode sheet based on the transport duration and the acquisition moment of the reference image frame comprises:
using a sum of the acquisition moment of the reference image frame and the transport duration as the marking moment of the target electrode sheet, or determining a current marking waiting time of the target electrode sheet as the transport duration at the acquisition moment of the reference image frame.

23. The method according to claim 22, **characterized in that** the step of using a sum of the acquisition moment of the reference image frame and the transport duration as the marking moment of the target electrode sheet is performed under a condition that a notification signal for acquisition of an image frame is received and the acquisition moment of the image frame is recorded in response to the notification signal, and the reference image frame is the current image frame.

24. The method according to claim 22, **characterized in that** the step of determining a current marking waiting time of the target electrode sheet as the transport duration at the acquisition moment of the reference image frame is performed under a condition that a notification signal for acquisition of an image frame is not received, the reference image frame is another image frame after the current image frame, and before the determining a current marking waiting time of the target electrode sheet as the transport duration at the acquisition moment of the reference image frame, the method further comprises:
monitoring whether acquisition of the reference image frame is completed to obtain the acquisition moment of the reference image frame.

25. The method according to claim 22, **characterized in that** the obtaining a transport duration required for movement of the electrode sheet roll by a target distance in the unwinding process comprises:
determining the target distance by using a preset distance between an image acquisition device and the marking device, a position of the positioning mark in the current image frame, a distance between the positioning mark and the markable position, and a distance between the current image frame and the reference image frame; and determining the transport duration by using the target distance.

26. The method according to claim 25, **characterized in that** the step of performing image acquisition on an electrode sheet roll in an unwinding process is performed by performing image acquisition in response to a pulse signal output by an encoder, and the determining the transport duration by using the target distance comprises:
dividing the target distance by a single-pulse precision of the encoder to obtain a first pulse count used to characterize the transport duration; and
the using a sum of the acquisition moment of the reference image frame and the transport duration as the marking moment of the target electrode sheet comprises:
recording a pulse count of the encoder each time an image frame is acquired to obtain a second pulse count, wherein the second pulse count is a pulse count recorded at the acquisition moment of the reference image frame; and
determining to trigger marking of the target electrode sheet under a condition that a recorded pulse count reaches a sum of the first pulse count and the second pulse count.

27. The method according to claim 25, **characterized in that** the step of performing image acquisition on an electrode sheet roll in an unwinding process is performed by performing image acquisition in response to a pulse signal output by an encoder, and the determining the transport duration by using the target distance comprises:
dividing the target distance by a single-pulse precision of the encoder to obtain a first pulse count used to characterize the transport duration; and
the determining a current marking waiting time of the target electrode sheet as the transport duration at the acquisition moment of the reference image frame comprises:
at the acquisition moment of the reference image frame, waiting for the encoder to output a pulse signal of the first pulse count before triggering marking of the target electrode sheet.

28. The method according to claim 20, **characterized in that** the step of detecting the current image frame and, under a condition that the positioning mark is detected in the current image frame, determining a marking moment of a target electrode sheet based on an acquisition moment of a reference image frame corresponding to the current image frame is performed by an image detection device, or is performed cooperatively by the image detection device and a marking control device.
